Europäisches Patentamt

European Patent Office

Office européen des brevets

(19)

(11) EP 1 261 212 A2

## (12) EUROPEAN PATENT APPLICATION

(43) Date of publication:
27.11.2002 Bulletin 2002/48

(51) Int Cl.⁷: **H04N 7/36**, H04N 7/32

(21) Application number: 02090152.6

(22) Date of filing: 23.04.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 24.04.2001 JP 2001125579
22.05.2001 JP 2001152166

(72) Inventors:
• **Akiyoshi, Kozo**
**Tokyo 106-0045 (JP)**
• **Akiyoshi, Nobuo**
**Tokyo 106-0045 (JP)**
• **Shinagawa, Yoshihisa c/o Monolith Co., Ltd,**
**Tokyo 106-0045 (JP)**

(71) Applicant: **Monolith Co., Ltd.**
**Tokyo 106-0045 (JP)**

(74) Representative: **Pfenning, Meinig & Partner**
**Mozartstrasse 17**
**80336 München (DE)**

(54) **Method and apparatus for coding and decoding image data**

(57) Image data are inputted, and the inputted data are separated into key frames and intermediate frames which are other than the key frames. The matching between the key frames are computed pixel by pixel, and virtual key frames as well as intermediate frames between the key frames are generated by interpolating the matching results. Difference is taken between this virtual frame and actual frame which has existed from the outset, so that the actual frames are coded with a small coding amount.

Fig.24

**Description**

The present invention relates to an image data processing technology, and it particularly relates to method and apparatus for coding or decoding image data that contain a plurality of frames.

The MPEG (Motion Picture Expert Group) which is de facto world standard of motion compression has expanded its targeted area to transmission media such as network and broadcast, from mere storage media such as CDs. There is no doubt that the digitization of the broadcast has prevailed around the MPEG compression coding technology. A barrier that has existed between the broadcast and the communications disappears, and the diversification of service-providing businesses becomes indispensable. Thus, we are facing the situation where it is hard to predict how the digital culture would evolve in this age of broadband.

Even in such the chaotic situation, there is one thing certain about the direction on the compression technology of motion pictures. That is the consistency where both higher compression rate and image quality shall be achieved. It is the well-known fact that block distortion in MPEG is responsible for keeping the compression rate from being improved.

Embodiments of the present invention has been made in view of the foregoing circumstances and an object thereof is to provide a coding and decoding technique by which to realize efficient compression of image data. Another object of the embodiments is to provide an image coding and decoding technology that meets conflicting demands of improving the compression rate while retaining the image quality.

Image data processed in the present invention may be motion pictures or still pictures, in which three-dimensional objects are made into two dimension, such as medical images. Namely, the image may change along time axis or spatial axis. Moreover, all types of images of arbitrary dimension which can be grasped as a frame can be processed.

A preferred embodiment according to the present invention relates to a method of coding image data. This method includes: a primary matching by which to compute a matching between a first key frame and a second key frame included in the image data; generating a virtual third key frame based on a result of the primary matching; coding an actual third key frame included in the image data, by utilizing the virtual third key frame; and a secondary matching by which to compute a matching between adjacent key frames among the first, second and actual third key frames.

A "key frame" indicates a reference frame on which a matching or other processings are to be performed, while an "intermediate frame" is a non-reference frame on which no processing is to be performed. In this patent specification, the term "frame" is, for the purpose of simplicity, used both as a unit of the image unless otherwise indicated, and as data itself, that is to be called "frame data", constituting the unit.

Key frames, such as the third key frame, which are coded depending on other key frames are called "dependent key frames," as occasion arises, whereas key frames other than the dependent key frames are called "independent key frames." The dependent key frames may be coded by methods other than those according to the present embodiment. For example, an intra-frame compression coding such as JPEG 2000 may be performed. Similarly, the independent frames may be coded by the method of the intra-frame compression coding.

Moreover, a third key frame may be coded by first and second key frames, and a fourth key frame may be coded by the second and third key frames and so forth, so that most of key frames can serve as dependent key frames. In that case, a frame group may be generated in which dependence is closed within itself as in GOP (Group Of Pictures) of MPEG.

The "virtual third key frame" is derived from a matching result, and the "actual third key frame" is a frame included in the original image data. The former is generated principally for the purpose of being made similar to the latter, but the former is different from the latter.

In this preferred embodiment according to the present invention, the actual third key frame is processed in two directions one of which is a line of being coded by the primary matching and another of which is a line of objects for the secondary matching. If a result of the secondary matching is acquired as corresponding point data, an intermediate frame between key frames can be generated by interpolation. The actual third key frame is coded based on the virtual third key frame. Thus, if a difference between the actual third key frame and the virtual key frame is substantially small, the compression coding of this difference results in reduction of a coding amount for the actual third key frame. By performing this coding in reversible manner, at least the third key frame can be restored completely.

It is to be noted that, at the time of the secondary matching, a processing need not be repeated for a pair of key frames which have already been processed in the primary matching. Moreover, data other than data explicitly indicated as "to be coded" may also be coded.

The primary matching may compute, pixel by pixel, a matching between the first key frame and the second key frame, and the generating may generate the virtual third key frame by performing, pixel by pixel, an interpolation computation based on a correspondence relation of position and intensity of pixels between the first and second key frames.

The method may further include: outputting, as a coded data stream, the first and second key frames, the coded third key frame and corresponding point data obtained as a result of the secondary matching.

The coded third key frame may be generated in such a manner that the coded third key frame includes data of a difference between the virtual third key frame and the actual third key frame. This difference data may be entropy-coded, reversible-coded (lossless-coded) or coded by other methods. The coded third key frame may be generated in such a manner that the coded third key frame further includes corresponding point data obtained as a result of the primary matching.

Another preferred embodiment according to the present invention also relates to a method of coding image data. In this method, the image frame data are separated into a key frame and an intermediate frame, and then coded. The method is characterized in that the intermediate frame is coded based on a result of matching between key frames, and at least part of the key frames, too, are coded based on a result of matching between other key frames. In other words, at least part of the key frames are dependent key frames, and the intermediate frame, which is coded by utilizing the dependent key frames too, receive a double-hierarchical coding processing, so to speak.

Still another preferred embodiment according to the present invention relates to an image data coding apparatus. This apparatus includes: a unit which acquires image data including a plurality of frames; a unit which computes a primary matching between first and second key frames included in the acquired image data; a unit which generates a virtual third key frame based on a result of the primary matching; a unit which codes an actual third key frame by utilizing the virtual third key frame; and a unit which computes a secondary matching between adjacent key frames among the first, second and actual third key frames.

Moreover, the first, second and third key frames may be arranged in this temporal order, and the generating unit may generate the virtual third key frame by extrapolation. Moreover, the first, third and second key frames may be arranged in this temporal order, and the generating unit may generate the virtual third key frame by interpolation.

This apparatus may further include a unit which outputs the first and second key frames, the coded third key frame and data obtained as a result of the secondary matching, as a coded data stream.

The coded third key frame may be generated in such a manner that it includes data of a difference between the virtual third key frame and the actual third key frame. The coded third key frame may or may not include corresponding point data obtained as a result of the primary matching (hereinafter also referred to as "primary corresponding point data"). When included, a decoding side can easily reproduce the virtual third key frame based on the primary corresponding point data, and can decode the actual third key frame based on the reproduced virtual third key frame. When the primary corresponding point data are not included in the coded third key frame, it is preferred that the decoding side perform the primary matching by taking the same procedure as in the coding side and the virtual third key frame be first reproduced, and the following processing will be the same. When the computational load at the decoding side is taken into serious consideration, it is desirable that data including the primary corresponding point data be sent. The same thing applies to corresponding point data obtained as a result of the second matching (hereinafter also referred to as "secondary corresponding point data").

Still another preferred embodiment according to the present invention relates to a method of decoding image data. This method includes: acquiring a coded data stream which stores data of first and second key frames and data of a third key frame coded based on a result of a matching between the first and second key frames; decoding the third key frame from the acquired coded data stream; and computing a matching between adjacent key frames among the first, second and third key frames, and thereby generating an intermediate frame.

In still another preferred embodiment, there is provided a method which includes: acquiring a coded data stream which stores data of first and second key frames, data of a third key frame coded based on a result of a matching therebetween, and corresponding point data obtained as a result of computation of a matching between adjacent key frames among the first, second and third key frames; decoding the third key frame from the acquired coded data stream; and generating an intermediate frame based on the corresponding point data.

The coded third key frame data are generated by, for example, coding a difference between the virtual third key frame generated based on a result of the matching between the first and second key frames and the actual third key frame. In this case, a decoding step may be such that after the virtual third key frame is generated by computing the matching between the first and second key frames, the actual third key frame is decoded based on the thus generated virtual third key frame.

When the coded third key frame data include corresponding point data which is a result of a matching between the first and second key frames, and coded data of a difference between a virtual third key frame that is to be generated based on the corresponding point data and an actual third key frame, a decoding step may be such that after the virtual third key frame is generated based on the corresponding point data, the actual third key frame can be decoded based on the thus generated virtual third key frame.

Still another preferred embodiment according to the present invention relates to a method of coding image data. This method includes: separating key frames included in the image data, into a key frame and an intermediate frame; generating a series of source hierarchical images of different resolutions by operating a multiresolutional critical point filter on a first key frame obtained by the separating; generating a series of destination hierarchical images of different resolutions by operating the multiresolutional critical point filter on a second key frame obtained by the separating; computing a matching of the source hierarchical images and the destination hierarchical images in a resolutional level hierarchy; generating a virtual third key frame based on a result of the matching; and coding an actual third key frame included in the image data, by utilizing the virtual third key frame.

Term "separating" includes meanings of classifying those initially unclassified into the key frames and the intermediate frames in a constructive sense, and classifying those initially classified in accordance with its indication in a negative sense.

Still another preferred embodiment according to the present invention also relates to an image data coding apparatus. This apparatus includes: a functional block which acquires a virtual key frame generated based on a result of a matching performed between key frames included in image data; and a functional block which codes an actual key frame included in the image data, by utilizing the virtual key frame. This apparatus may further include a functional block which computes a matching between adjacent key frames including the actual key frame and which codes an intermediate frame that is other than the key frames.

Still another preferred embodiment according to the present invention relates to a method of decoding image data. This method includes: acquiring first and second key frames included in a coded data stream of the image data, and a third key frame which is coded based on a result of a processing performed between the first and second key frames and which is different from the first and second key frames; decoding the thus acquired coded third key frame; and generating an intermediate frame that is other than key frames by performing a processing between a plurality of key frames including the third key frame obtained as a result of the decoding.

It is to be noted that any arbitrary replacement or substitution of the above-described structural components and the steps, expressions replaced or substituted in part or whole between a method and an apparatus as well as addition thereof, and expressions changed to a computer program, recording medium or the like are all effective as and encompassed by the present embodiments.

Moreover, this summary of the invention does not necessarily describe all necessary features so that the invention may also be sub-combination of these described features.

The invention will be now described by way of example with reference to the accompanying drawings, throughout which like parts are referred to by like references, and in which:

Fig. 1(a) is an image obtained as a result of the application of an averaging filter to a human facial image.
Fig. 1(b) is an image obtained as a result of the application of an averaging filter to another human facial image.
Fig. 1(c) is an image of a human face at $p^{(5,0)}$ obtained in a preferred embodiment in the base technology.
Fig. 1(d) is another image of a human face at $p^{(5,0)}$ obtained in a preferred embodiment in the base technology.
Fig. 1(e) is an image of a human face at $p^{(5,1)}$ obtained in a preferred embodiment in the base technology.
Fig. 1(f) is another image of a human face at $p^{(5,1)}$ obtained in a preferred embodiment in the base technology.
Fig. 1(g) is an image of a human face at $p^{(5,2)}$ obtained in a preferred embodiment in the base technology.
Fig. 1(h) is another image of a human face at $p^{(5,2)}$ obtained in a preferred embodiment in the base technology.
Fig. 1(i) is an image of a human face at $p^{(5,3)}$ obtained in a preferred embodiment in the base technology.
Fig. 1(j) is another image of a human face at $p^{(5,3)}$ obtained in a preferred embodiment in the base technology.
Fig. 2(R) shows an original quadrilateral.

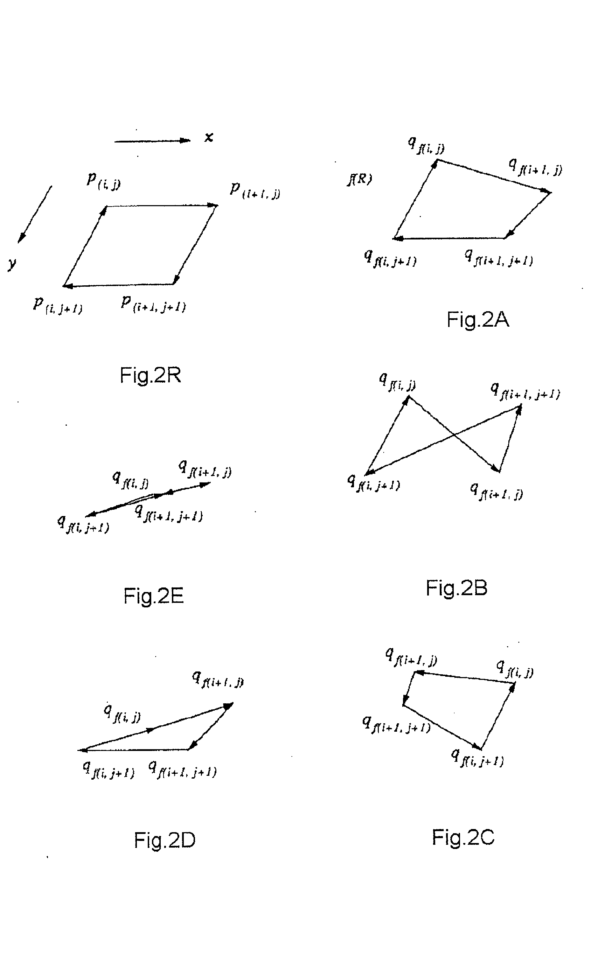

Fig. 2(A) shows an inherited quadrilateral.
Fig. 2(B) shows an inherited quadrilateral.
Fig. 2(C) shows an inherited quadrilateral.
Fig. 2(D) shows an inherited quadrilateral.
Fig. 2(E) shows an inherited quadrilateral.

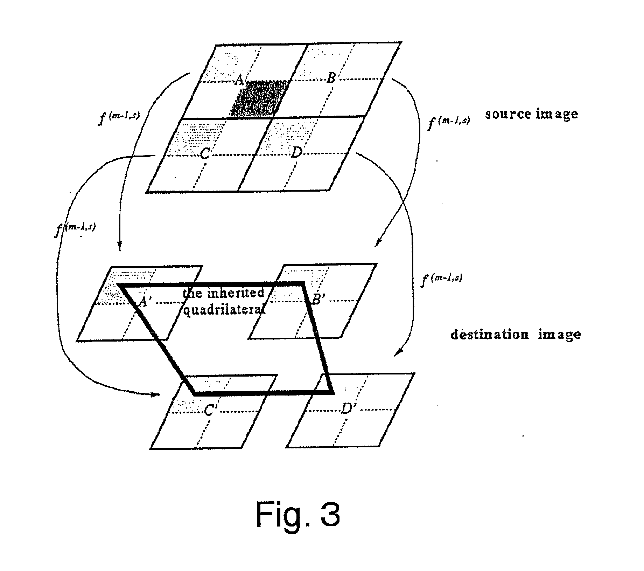

Fig. 3 is a diagram showing the relationship between a source image and a destination image and that between the m-th level and the (m-1)th level, using a quadrilateral.

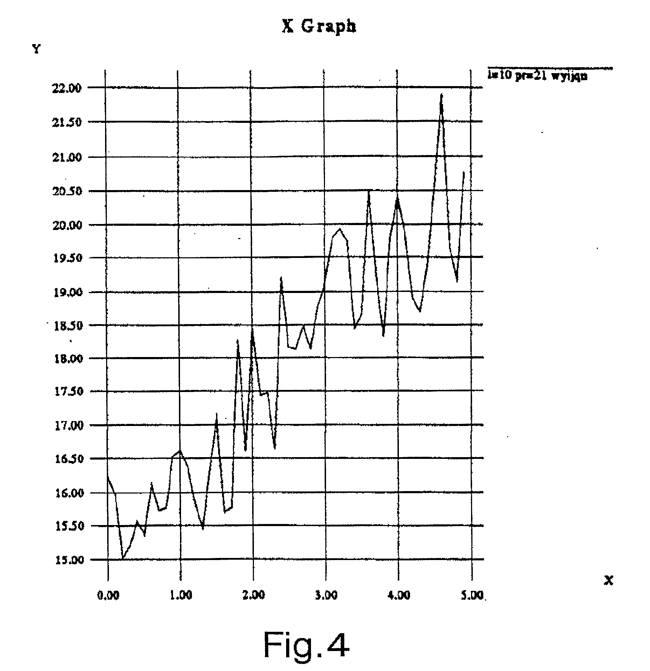

Fig. 4 shows the relationship between a parameter $\eta$ (represented by x-axis) and energy $C_f$ (represented by y-axis).

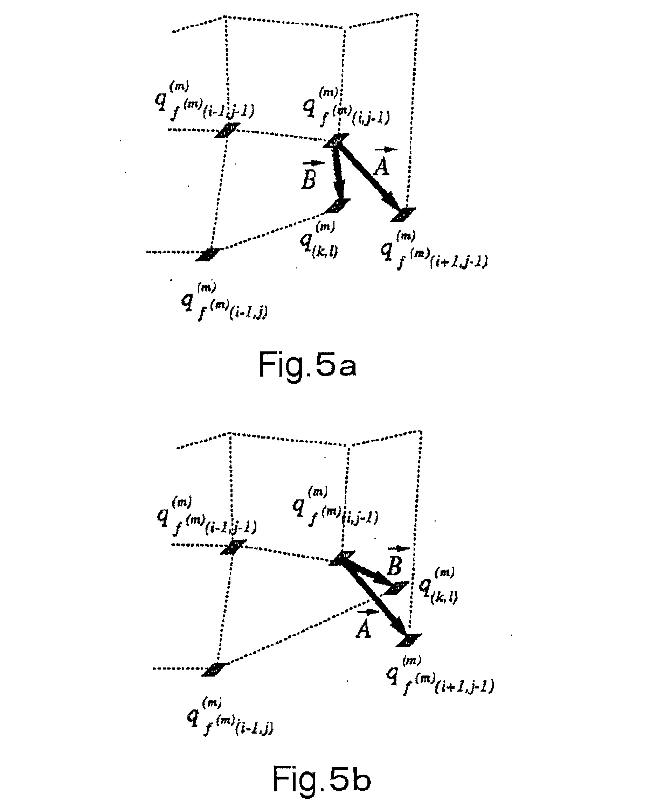

Fig. 5(a) is a diagram illustrating determination of whether or not the mapping for a certain point satisfies the bijectivity condition through the outer product computation.
Fig. 5(b) is a diagram illustrating determination of whether or not the mapping for a certain point satisfies the bijectivity condition through the outer product computation.

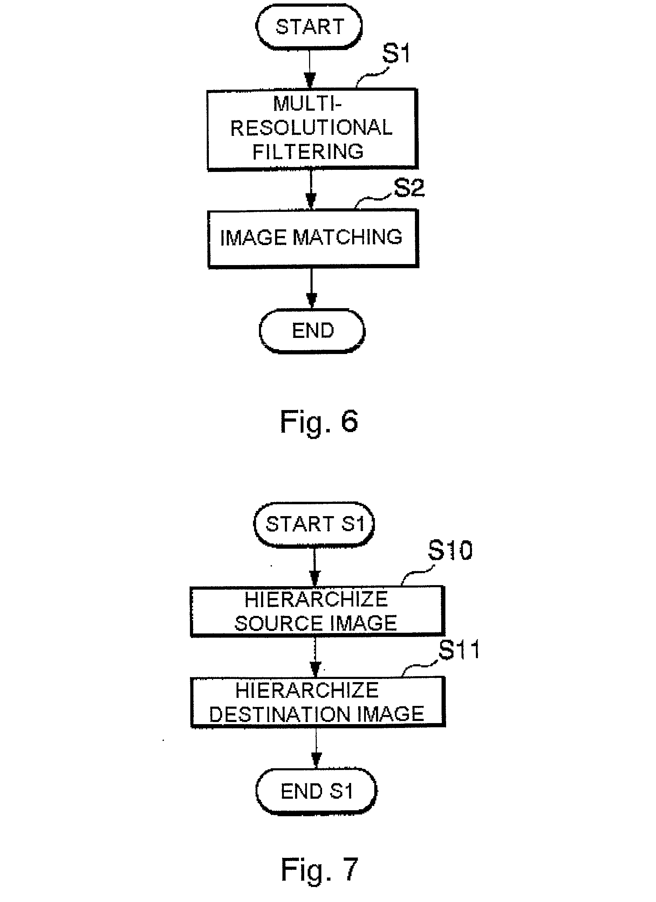

Fig. 6 is a flowchart of the entire procedure of a preferred embodiment in the base technology.
Fig. 7 is a flowchart showing the details of the process at S1 in Fig. 6.

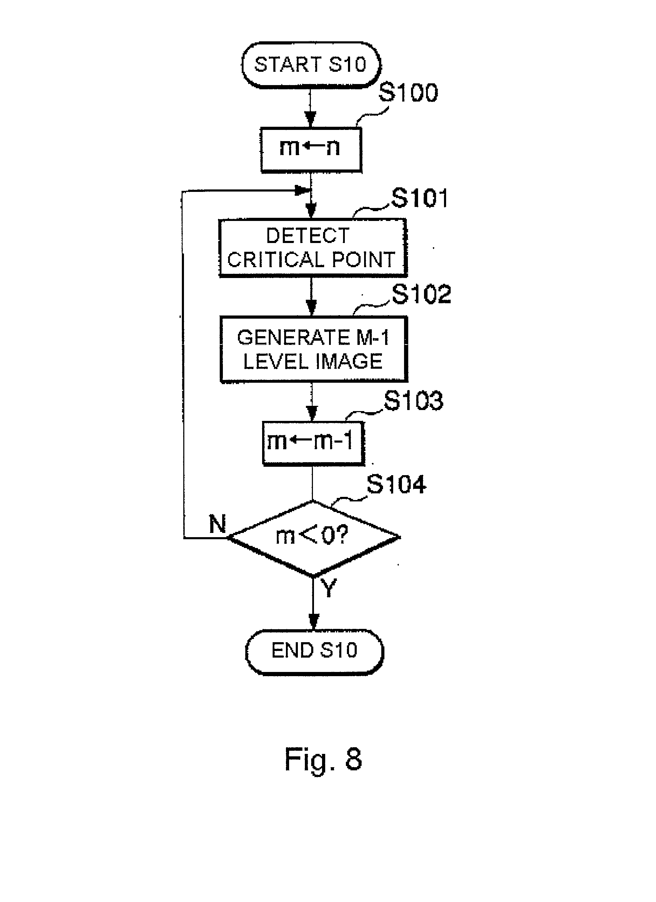

Fig. 8 is a flowchart showing the details of the process at S10 in Fig. 7.

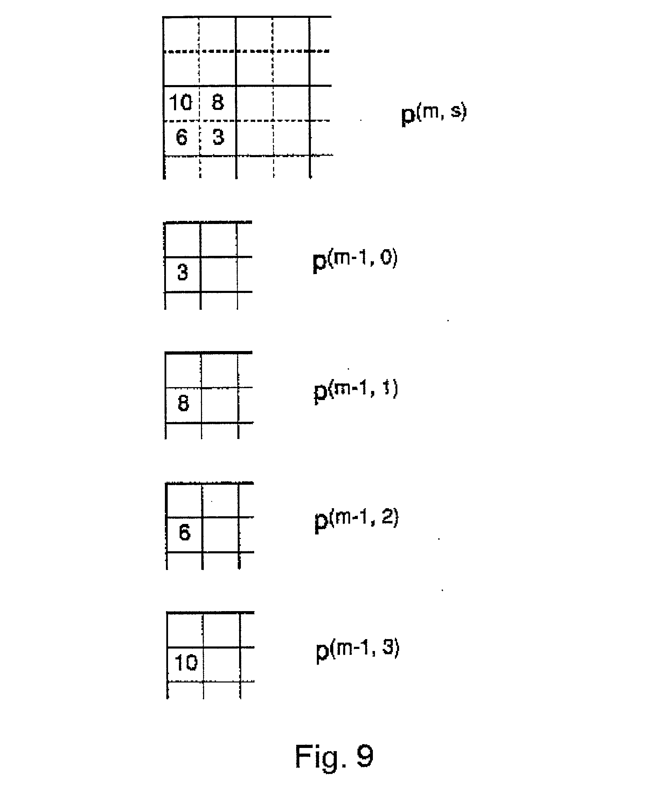

Fig. 9 is a diagram showing correspondence between partial images of the m-th and (m-1)th levels of resolution.

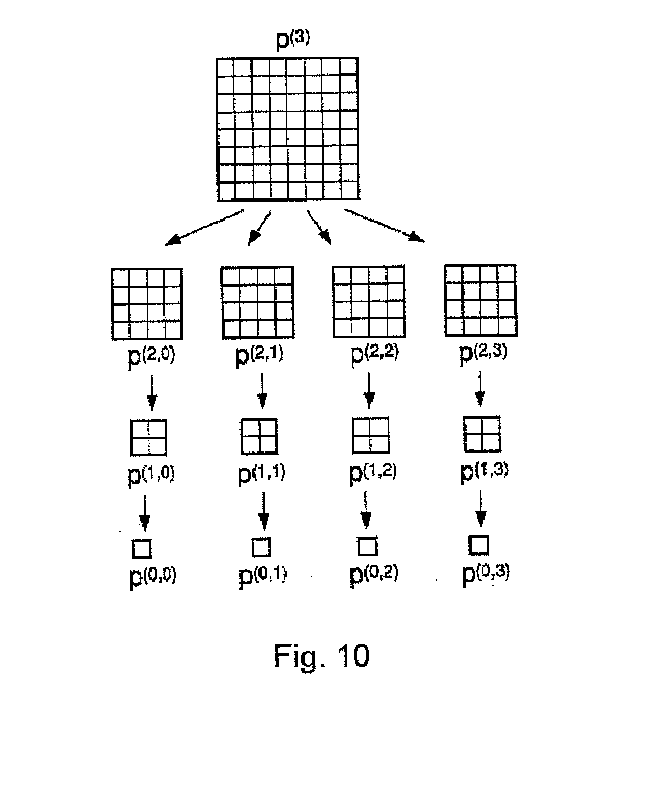

Fig. 10 is a diagram showing source hierarchical images generated in the embodiment in the base technology.

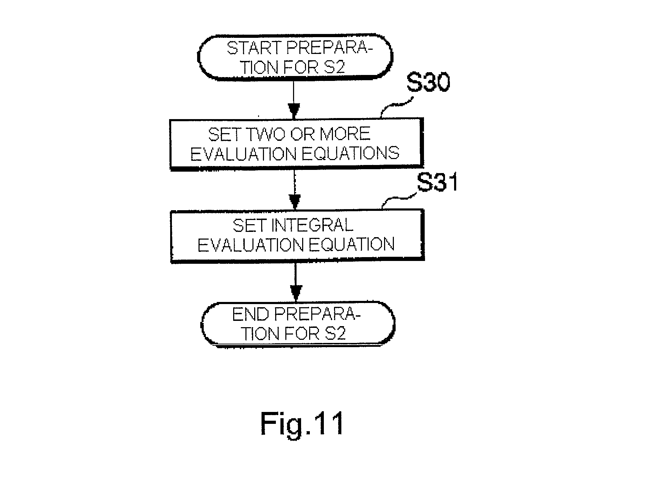

Fig. 11 is a flowchart of a preparation procedure for S2 in Fig. 6.

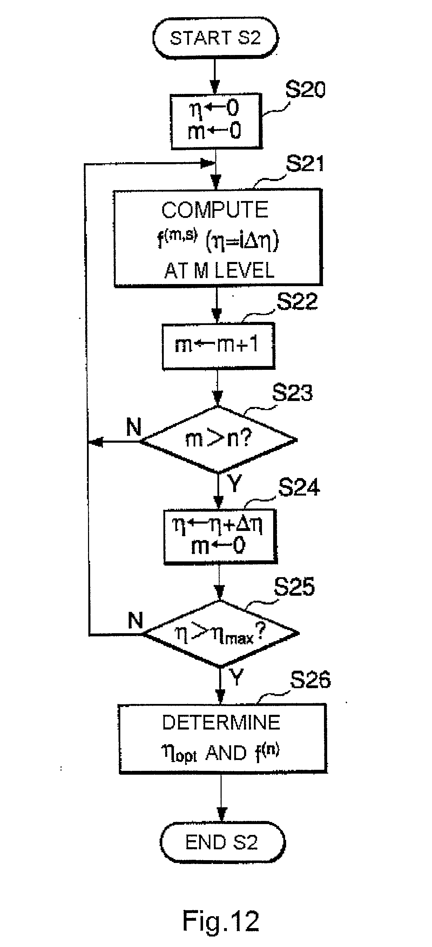

Fig. 12 is a flowchart showing the details of the process at S2 in Fig. 6.

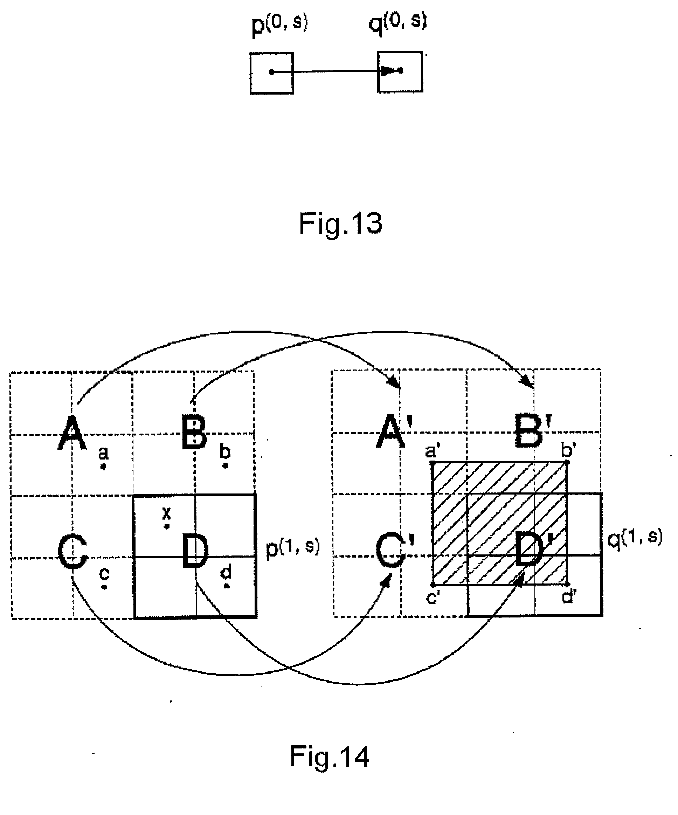

Fig. 13 is a diagram showing the way a submapping is determined at the 0-th level.

Fig. 14 is a diagram showing the way a submapping is determined at the first level.

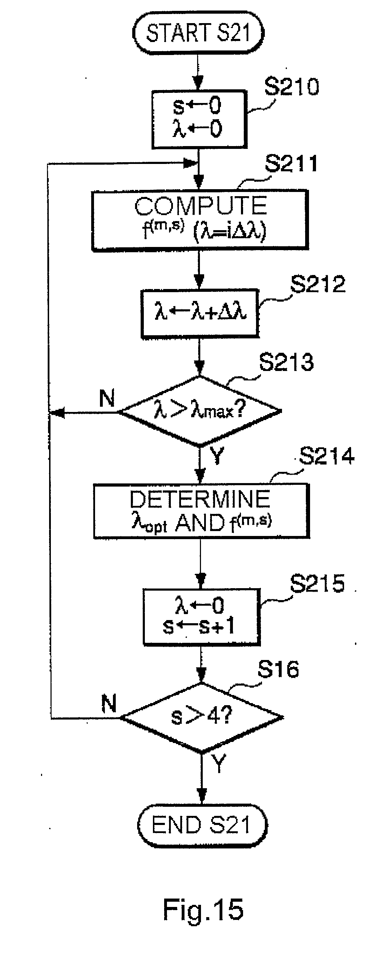

Fig. 15 is a flowchart showing the details of the process at S21 in Fig. 12.

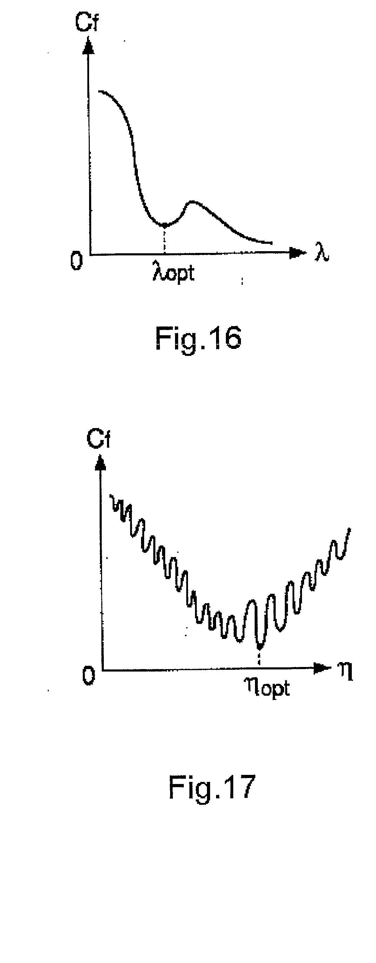

Fig. 16 is a graph showing the behavior of energy $C_f^{(m,s)}$ corresponding to $f^{(m,s)}$ ($\lambda=i\Delta\lambda$) which has been obtained for a certain $f^{(m,s)}$ while varying $\lambda$.

Fig. 17 is a diagram showing the behavior of energy $C_f^{(n)}$ corresponding to $f^{(n)}$ ($\eta=i\Delta\eta$)($i$=0,1,...) which has been obtained while varying $\eta$.

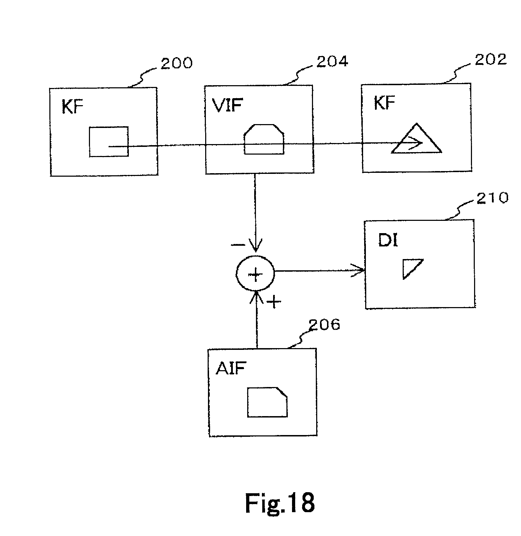

Fig. 18 is a conceptual diagram showing image data coding.

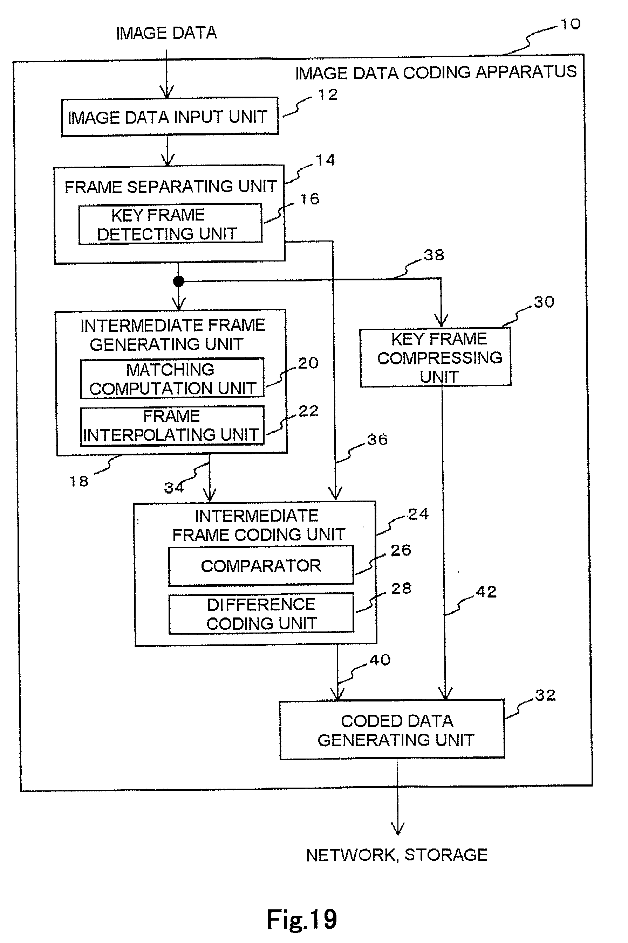

Fig. 19 shows a structure of an image data coding apparatus.

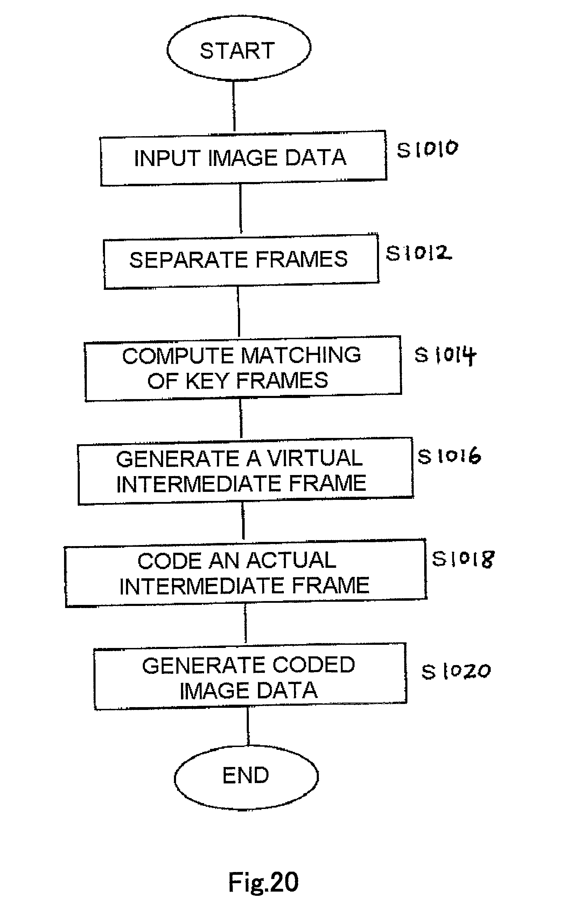

Fig. 20 is a flowchart showing processings carried out by the image data coding apparatus.

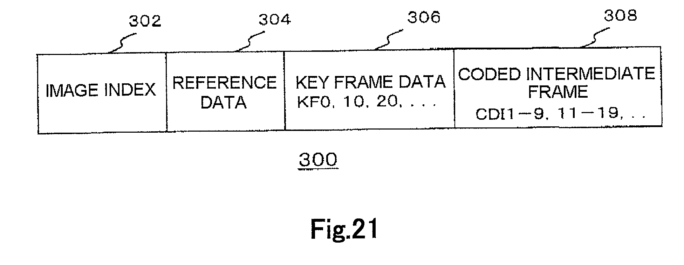

Fig. 21 shows a structure of coded image data.

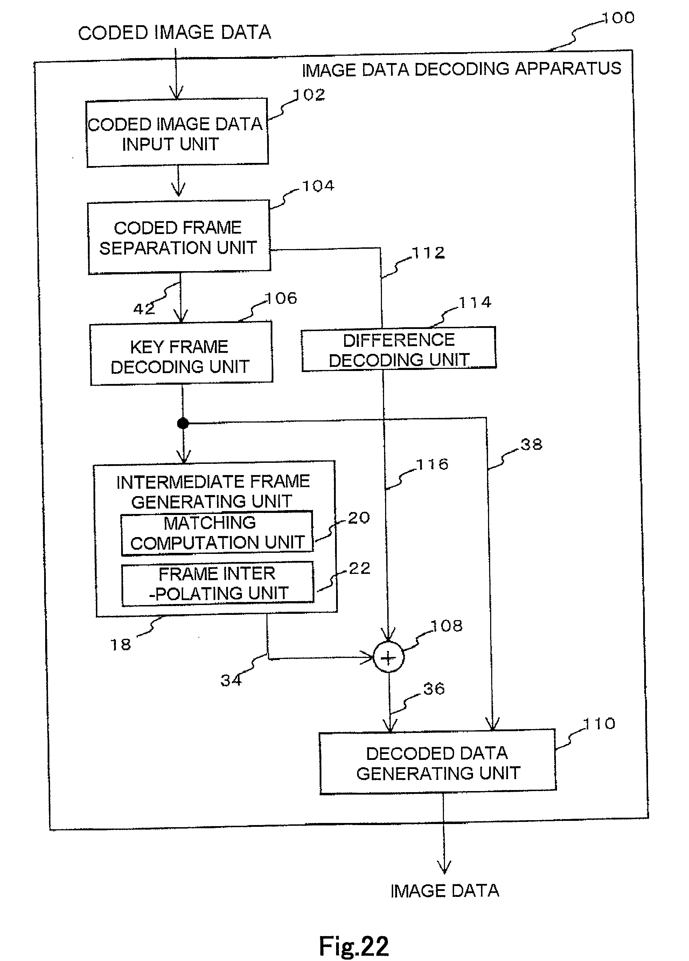

Fig. 22 shows a structure of an image data decoding apparatus.

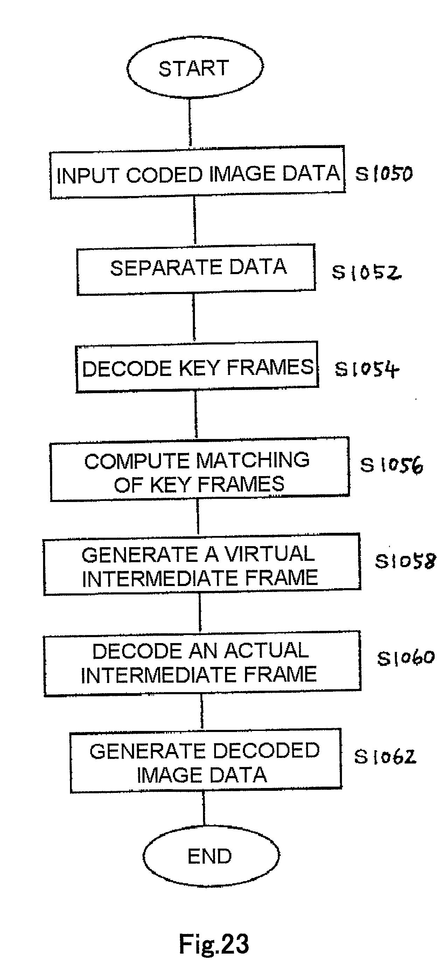

Fig. 23 is a flowchart showing processings carried out by the image data decoding apparatus.

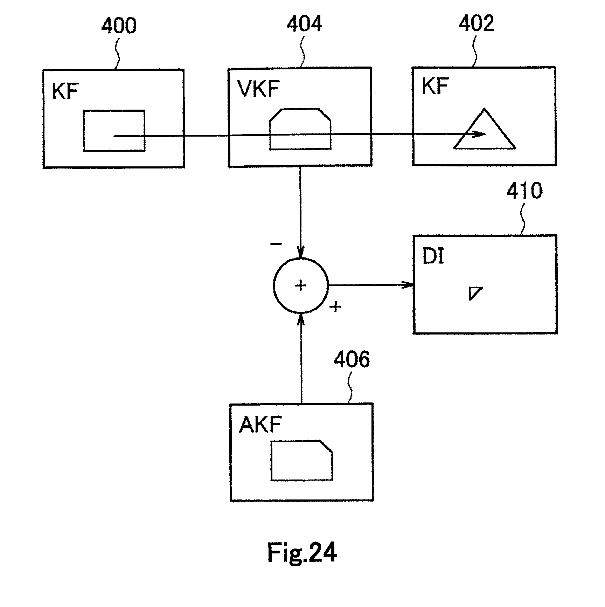

Fig. 24 is a conceptual diagram showing a processing in which image data are coded according to the extended technology of the present embodiment.

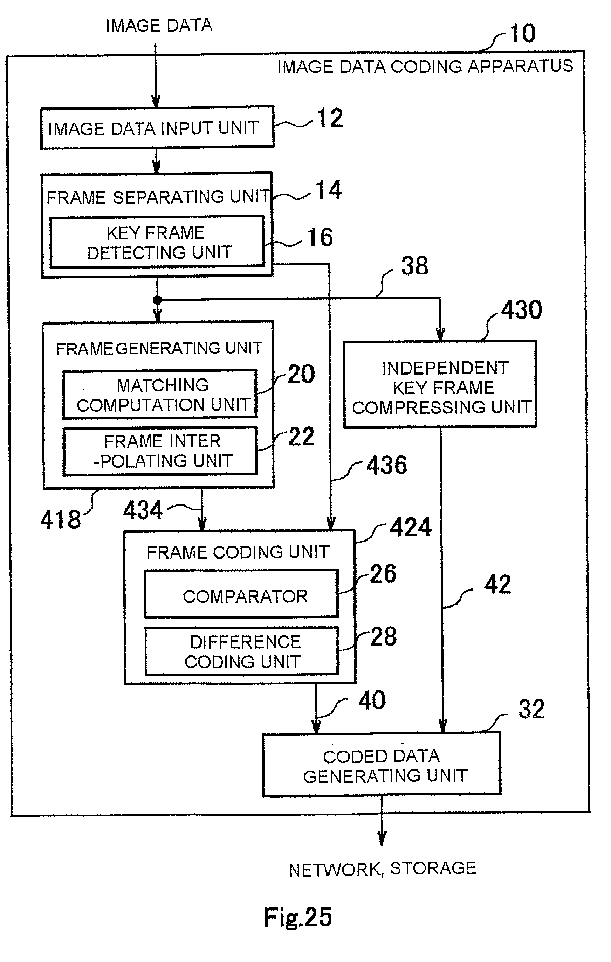

Fig. 25 shows a structure of an image data coding apparatus according to the extended technology of the present embodiment.

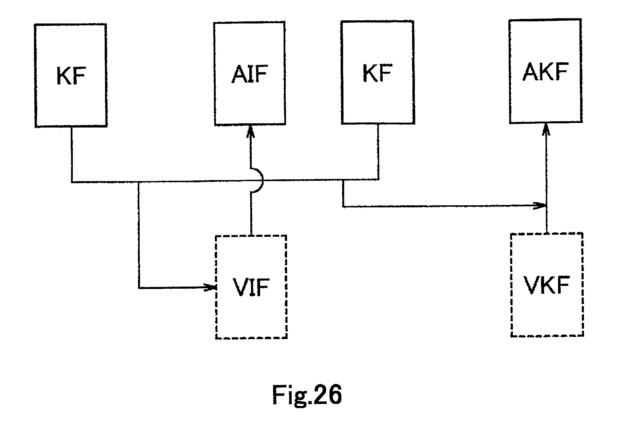

Fig. 26 shows a concept of the image data coding in which dependent key frames and intermediate frames are coded by utilizing actual key frames, according to the extended technology of the present embodiment.

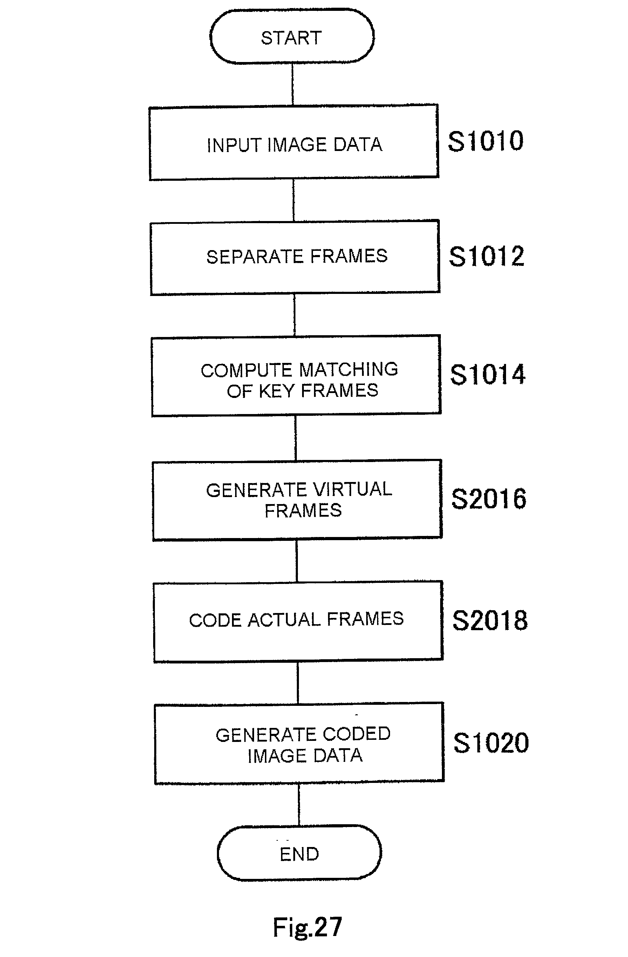

Fig. 27 is a flowchart showing processings carried out by the image data coding apparatus according to the extended technology of the present embodiment.

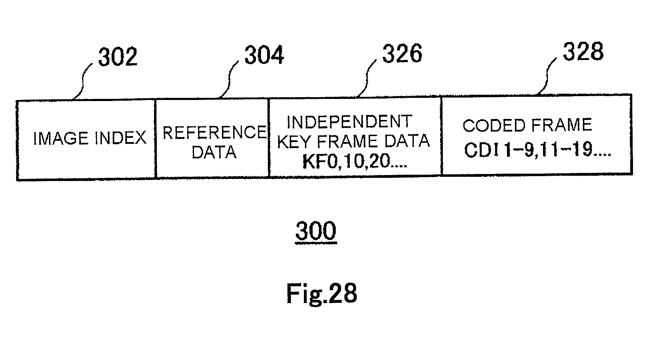

Fig. 28 is a structure of coded image data according to the extended technology of the present embodiment.

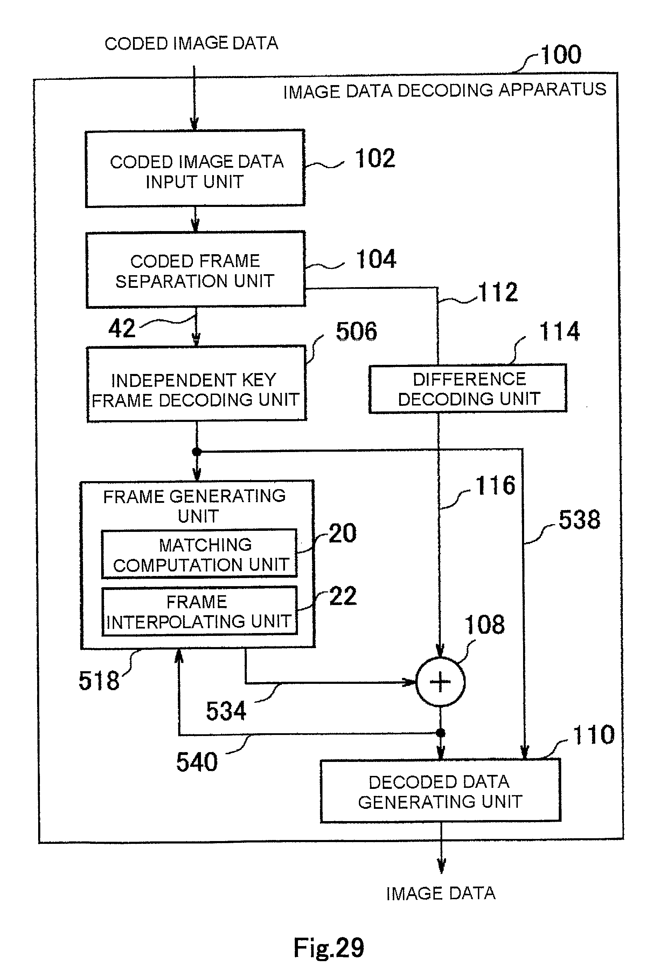

Fig. 29 is a structure of an image data decoding apparatus according to the extended technology of the present embodiment.

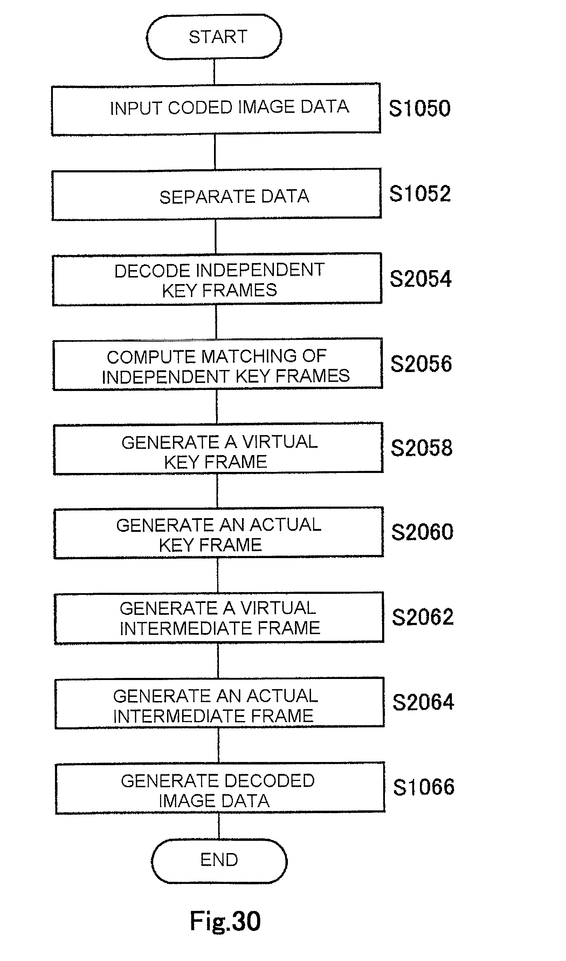

Fig. 30 is a flowchart showing processings carried out by the image data decoding apparatus according to the extended technology of the present embodiment.

DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections [1] and [2] belong to the base technology, where [1] describes elemental techniques and [2] describes a processing procedure. These techniques are patented under Japanese Patent No. 2927350 and owned by the same assignee of the present invention, and they realize an optimal achievement when combined with the present invention. However, it is to be noted that the image matching techniques which can be adopted in the present embodiments are not limited to this.

In Figs. 18 to 30, image data coding and decoding techniques utilizing, in part, the base technology will be described in a specific manner.

**Base Technology**

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval $[0, N] \subset R$ is denoted by I. A pixel of the image at position (i, j) is denoted by $p^{(i,j)}$ where $i,j \in I$.

Here, a multiresolutional hierarchy is introduced. Hierarchized image groups are produced by a multiresolutional filter. The multiresolutional filter carries out a two dimensional search on an original image and detects critical points therefrom. The multiresolutinal filter then extracts the critical points from the original image to construct another image having a lower resolution. Here, the size of each of the respective images of the m-th level is denoted as $2^m X 2^m$ ($0 \leq m \leq n$). A critical point filter constructs the following four new hierarchical images recursively, in the direction descending from n.

$$p_{(i,j)}^{(m,0)} = \min(\min(p_{(2i,2j)}^{(m+1,0)}), p_{(2i,2j+1)}^{(m+1,0)}, \min(p_{(2i+1,2j)}^{(m+1,0)}, p_{(2i+1,2j+1)}^{(m+1,0)}))$$

$$p_{(i,j)}^{(m,1)} = \max(\min(p_{(2i,2j)}^{(m+1,1)}), p_{(2i,2j+1)}^{(m+1,1)}, \min(p_{(2i+1,2j)}^{(m+1,1)}, p_{(2i+1,2j+1)}^{(m+1,1)}))$$

$$p_{(i,j)}^{(m,2)} = \min(\max(p_{(2i,2j)}^{(m+1,2)}), p_{(2i,2j+1)}^{(m+1,2)}, \max(p_{(2i+1,2j)}^{(m+1,2)}, p_{(2i+1,2j+1)}^{(m+1,2)}))$$

$$p_{(i,j)}^{(m,3)} = \max(\max(p_{(2i,2j)}^{(m+1,3)}), p_{(2i,2j+1)}^{(m+1,3)}, \max(p_{(2i+1,2j)}^{(m+1,3)}, p_{(2i+1,2j+1)}^{(m+1,3)})) \tag{1}$$

where let

$$p={}_{(i,j)}^{(n,0)} = p={}_{(i,j)}^{(n,1)} = p={}_{(i,j)}^{(n,2)} = p={}_{(i,j)}^{(n,3)} = p={}_{(i,j)} \tag{2}$$

The above four images are referred to as subimages hereinafter. When $\min_{x \leq t \leq x+1}$ and $\max_{x \leq t \leq x+1}$ are abbreviated to and $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter detects a critical point of the original image for every block consisting of 2 X 2 pixels. In this detection, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are detected as a local maximum point, a local minimum point, and a saddle point, respectively.

By using the critical point filter, an image (1 pixel here) of a critical point detected inside each of the respective blocks serves to represent its block image (4 pixels here). Thus, resolution of the image is reduced. From a singularity theoretical point of view, $\alpha$ (x) $\alpha$ (y) preserves the local minimum point(minima point), $\beta$ (x) $\beta$ (y) preserves the local maximum point(maxima point), $\alpha$ (x) $\beta$ (y) and $\beta$ (x) $\alpha$ (y) preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

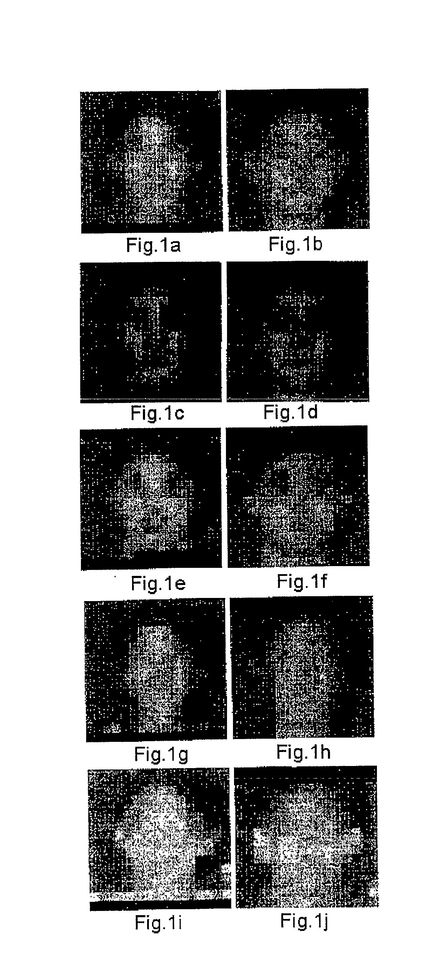

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p_{(i,j)}^{(n)}$ and that of the destination image at (k,l) is denoted by $q_{(k,l)}^{(n)}$ where i, j, k, l ∈ I. The energy of the mapping between the images (described later) is then defined. This energy is determined by the difference in the intensity of the pixel of the source image and its corresponding pixel of the destination image and the smoothness of the mapping. First, the mapping $f^{(m,0)}:p^{(m,0)} \to q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$f^{(m,i)} : p^{(m,\sigma(i))} \to q^{(m,\sigma(i))} \tag{3}$$

where σ (i) ∈ {0,1,2,3}.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}: I/2^{n-m} \times I/2^{n-m} \to I/2^{n-m} \times I/2^{n-m}$ (s = 0,1,...), where $f_{(i,j)}^{(m,s)} = (k,l)$ means that $p_{(i,j)}^{(m,s)}$ of the source image is mapped to $q_{(k,l)}^{(m,s)}$ of the destination image. For simplicity, when $f(i,j) = (k,l)$ holds, a pixel $q_{(k,l)}$ is denoted by $q_{f(i,j)}$.

When the data sets are discrete as image pixels (grid points) treated in the base technology, the definition of bijectivity is important. Here, the bijection will be defined in the following manner, where i,i',j,j',k and l are all integers. First, each square region (4)

$$p_{(i,j)}^{(m,s)} p_{(i,1,j)}^{(m,s)} p_{(i+1,j+1)}^{(m,s)} p_{(i,j+1)}^{(m,s)} \tag{4}$$

on the source image plane denoted by R is considered,
where i = 0, ..., $2^m$-1, and j = 0, ..., $2^m$-1. The edges of R are directed as follows.

$$\overrightarrow{p_{(i,j)}^{(m,s)} p_{(i+1,j)}^{(m,s)}}, \overrightarrow{p_{(i+1,j)}^{(m,s)} p_{(i+1,j+1)}^{(m,s)}}, \overrightarrow{p_{(i+1,j+1)}^{(m,s)} p_{(i,j+1)}^{(m,s)}} \text{ and } \overrightarrow{p_{(i,j+1)}^{(m,s)} p_{(i,j)}^{(m,s)}} \tag{5}$$

This square will be mapped by f to a quadrilateral on the destination image plane. The quadrilateral (6)

$$q_{(i,j)}^{(m,s)} q_{(i+1,j)}^{(m,s)} q_{(i+1,j+1)}^{(m,s)} q_{(i,j+1)}^{(m,s)} \tag{6}$$

denoted by $f^{(m,s)}$ (R) should satisfy the following bijectivity conditions(BC).
(So,

$$f^{(m,s)}(R) = f^{(m,s)}(p_{(i,j)}^{(m,s)} p_{i+1,j}^{(m,s)} (p_{(i+1,j+1)}^{(m,s)} p_{(i,j+1)}^{(m,s)}) = q_{(i,j)}^{(m,s)} q_{(i+1,j)}^{(m,s)} q_{(i+1,j+1)}^{(m,s)} q_{(i,j+1)}^{(m,s)})$$

1. The edges of the quadrilateral $f^{(m,s)}(R)$ should not intersect one another.
2. The orientation of the edges of $f^{(m,s)}$ (R) should be the same as that of R (clockwise in the case of Fig. 2).
3. As a relaxed condition, retraction mapping is allowed.

The bijectivity conditions stated above shall be simply referred to as BC hereinafter.

Without a certain type of a relaxed condition, there would be no mappings which completely satisfy the BC other than a trivial identity mapping. Here, the length of a single edge of $f^{(m,s)}$ (R) may be zero. Namely, $f^{(m,s)}$ (R) may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.

In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=2^m-1, j=0, j=2^m-

1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C_{(i,j)}^{(m,s)}$ of the mapping $f^{(m,s)}$ at (i,j) is determined by the following equation (7).

$$C_{(i,j)}^{(m,s)} = \left| V(p_{(i,j)}^{(m,s)}) - V(q_{f(i,j)}^{(m,s)}) \right|^2 \qquad --- \quad (7)$$

where $V(p_{(i,j)}^{(m,s)}$ and $V(q_{f(i,j)}^{(m,s)})$ are the intensity values of the pixels $p_{(i,j)}^{(m,s)}$ and $q_{f(i,j)}^{(m,s)}$, respectively. The total energy $C^{(m,s)}$ of f is a matching evaluation equation, and can be defined as the sum of $C_{(i,j)}^{(m,s)}$ as shown in the following equation (8).

$$C_f^{(m,s)} = \sum_{i=0}^{i=2^m-1} \sum_{j=0}^{j=2^m-1} C_{(i,j)}^{(m,s)} \qquad --- \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p_{(i,j)}^{(m,s)}$ and $q_{f(i,j)}^{(m,s)}$ (i=0,1,...2^m-1, j=0,1,...,2^m1), regardless of the intensity of the pixels. The energy $D_{(i,j)}^{(m,s)}$ of the mapping $f^{(m,s)}$ at a point (i,j) is determined by the following equation (9).

$$D_{(i,j)}^{(m,s)} = \eta E_{0\,(i,j)}^{(m,s)} + E_{1\,(i,j)}^{(m,s)} \qquad 9$$

where the coefficient parameter η which is equal to or greater than 0 is a real number. And we have

$$E_{0(i,j)}^{(m,s)} = \left\| (i,j) - f^{(m,s)}(i,j) \right\|^2 \qquad\qquad 10$$

$$E_{1(i,j)}^{(m,s)} = \sum_{i'=i-1}^{i} \sum_{j'=j-1}^{j} \left\| (f^{(m,s)}(i,j) - (i,j)) - (f^{(m,s)}(i',j') - (i',j')) \right\|^2 / 4 \quad ---$$

$$(11)$$

where

$$\|(x,y)\| = \sqrt{x^2 + y^2} \qquad\qquad (12)$$

and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1} \sum_{j=0}^{J=2^m-1} D_{(i,j)}^{(m,s)} \qquad --- \quad (13)$$

[1. 3. 2. 3] Total energy of the mapping

The total energy of the mapping, that is, a combined evaluation equation which relates to the combination of a plurality of evaluations, is defined as $\lambda C_{(i,j)}^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{ \lambda C_f^{(m,s)} + D_f^{(m,s)} \} \qquad --- \quad (14)$$

Care must be exercised in that the mapping becomes an identity mapping if $\lambda$=0 and $\eta$=0 (i.e., $f^{(m,s)}$ (i,j)=(i,j) for all i=0,1,...,$2^m$-1 and j=0,1,...,$2^m$-1). As will be described later, the mapping can be gradually modified or transformed from an identity mapping since the case of $\lambda$=0 and $\eta$=0 is evaluated at the outset in the base technology. If the combined evaluation equation is defined as $C_f^{(m,s)} + \lambda D_f^{(m,s)}$ where the original position of $\lambda$ is changed as such, the equation with $\lambda$=0 and $\eta$=0 will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \quad (15)$$

$p^{(m-1,s)}$ and $q^{(m-1,s)}$ are respectively called the parents of $p^{(m,s)}_{(i',j')}$ and $q^{(m,s)}_{(i',j')}$, where $\lfloor x \rfloor$ denotes the largest integer not exceeding x. Conversely, $p^{(m,s)}_{(i,j)}$ and $q^{(m,s)}_{(i,j)}$ are the child of $p^{(m-1,s)}_{(i',j')}$ and the child of $q^{(m-1,s)}_{(i',j')}$, respectively. A function parent(i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p^{(m,s)}$ and $q^{(m,s)}$ is determined by computing the energy and finding the minimum thereof. The value of f$^{(m,s)}$ (i,j)=(k,l) is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g^{(m,s)}(i-1,j-1)} q^{(m,s)}_{g^{(m,s)}(i-1,j+1)} q^{(m,s)}_{g^{(m,s)}(i+1,j+1)} q^{(m,s)}_{g^{(m,s)}(i+1,j-1)} \qquad (17)$$

where

$$g^{(m,s)}(i,j) = f^{(m-1,s)}(parent(i,j)) + f^{(m-1,s)}(parent(i,j) + (1,1)) \qquad (18)$$

The quadrilateral defined above is hereinafter referred to as the inherited quadrilateral of $p^{(m,s)}_{(i,j)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel $q^{(m,s)}_{f^{(m)}(i,j)}$ ) which exists inside the inherited quadrilateral A'B'C'D'. Thereby, bridging from the mapping at the (m-1)th level to the mapping at the m-th level is achieved.

The energy E$_0$ defined above is now replaced by the following (19) and (20)

$$E_{0(i,j)} = \| f^{(m,0)}(i,j) - g^{(m)}(i,j) \|^2 \qquad (19)$$

$$E_{0(i,j)} = \| f^{(m,s)}(i,j) - f^{(m,s-1)}(i,j) \|^2, \ (1 \le i) \qquad (20)$$

for computing the submapping f$^{(m,0)}$ and the submapping f$^{(m,s)}$ at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between f$^{(m,s)}$ (i, j) and the location where (i,j) should be mapped when regarded as a part of a pixel at the (m-1)the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of f$^{(m,s)}$ (i,j). L is increased until such a pixel is found or L reaches its upper bound $L^{(m)}_{max}$. $L^{(m)}_{max}$ is fixed for each level m. If no such a pixel is found at all, the third condition of the BC is ignored temporarily and such mappings that caused the area of the transformed quadrilateral to become zero (a point or a line) will be permitted so as to determine f$^{(m,s)}$ (i,j). If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C_f^{(m,s)}$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D_f^{(m,s)}$ in the equation 14 tends to increase abruptly.
4. As a result, since the value of the equation 14 tends to increase abruptly, $f^{(m,s)}$ changes in order to suppress the abrupt increase of $D_f^{(m,s)}$. As a result, $C_f^{(m,s)}$ increases.

Therefore, a threshold value at which $C_f^{(m,s)}$ turns to an increase from a decrease is detected while a state in which the equation (14) takes the minimum value with $\lambda$ being increased is kept. Such $\lambda$ is determined as the optimal value at $\eta=0$. Then, the behavior of $C_f^{(m,s)}$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C_f^{(m,s)} + D_f^{(m,s)}$. $D_{(i,j)}^{(m,s)}$ in the equation (9) represents the smoothness and theoretically becomes minimum when it is the identity mapping. $E_0$ and $E_1$ increase as the mapping is further distorted. Since $E_1$ is an integer, 1 is the smallest step of $D_f^{(m,s)}$. Thus, that changing the mapping reduces the total energy is impossible unless a changed amount (reduction amount) of the current $\lambda C_{(i,j)}^{(m,s)}$ is equal to or greater than 1. Since $D^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as $\lambda$ increases. The histogram of $C_{(i,j)}^{(m,s)}$ is denoted as h(l), where h(l) is the number of pixels whose energy $C_{(i,j)}^{(m,s)}$ is $l^2$. In order that $\lambda l^2 \cong 1$, for example, the case of $l^2=1/\lambda$ is considered. When $\lambda$ varies from $\lambda_1$ to $\lambda_2$, a number of pixels (denoted A) expressed by the following (21)

$$A = \sum_{l=\left\lceil \frac{1}{\lambda_2} \right\rceil}^{\left\lfloor \frac{1}{\lambda_1} \right\rfloor} h(l) \cong \int_{l=\frac{1}{\lambda_2}}^{\frac{1}{\lambda_1}} h(l)\,dl = -\int_{\lambda_2}^{\lambda_1} h(l)\,\frac{1}{\lambda^{3/2}}\,d\lambda = \int_{\lambda_1}^{\lambda_2} \frac{h(l)}{\lambda^{3/2}}\,d\lambda \qquad --- \;(21)$$

changes to a more stable state having the energy (22) which is

$$C_f^{(m,s)} - l^2 = C_f^{(m,s)} - \frac{1}{\lambda}. \tag{22}$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \tag{23}$$

As a result, the equation (24) holds.

$$\frac{\partial C_f^{(m,s)}}{\partial \lambda} = -\frac{h(l)}{\lambda^{5/2}} \tag{24}$$

Since h(l)>0 , $C_f^{(m,s)}$ decreases in normal case. However, when $\lambda$ tends to exceed the optimal value, the above phenomenon that is characterized by the increase in $C_f^{(m,s)}$ occurs. The optimal value of $\lambda$ is determined by detecting this phenomenon. When

$$h(l) = Hl^k = \frac{H}{\lambda^{k/2}} \tag{25}$$

is assumed where both H(h>0) and k are constants, the equation (26) holds.

$$\frac{\partial C_f^{(m,s)}}{\partial \lambda} = -\frac{H}{\lambda^{5/2 + k/2}} \tag{26}$$

Then, if k≠-3, the following (27) holds.

$$C_f^{(m,s)} = C + \frac{H}{(3/2 + k/2)\lambda^{3/2 + k/2}} \tag{27}$$

The equation (27) is a general equation of $C_f^{(m,s)}$ (where C is a constant).
When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}} \tag{28}$$

holds, the number of pixels violating the BC increases at a rate of the equation (29).

$$B_0 = \frac{k(l)p_0}{\lambda^{3/2}} \tag{29}$$

Thus,

$$\frac{B_0 \lambda^{3/2}}{P_0 h(l)} = 1 \tag{30}$$

is a constant. If assumed that h(l) =Hl$^k$, the following (31), for example,

$$B_0 \lambda^{3/2+k/2} = p_0 H \tag{31}$$

becomes a constant. However, when $\lambda$ exceeds the optimal value, the above value of (31) increases abruptly. By detecting this phenomenon, whether or not the value of $B_0 \lambda^{3/2+k/2} /2^m$ exceeds an abnormal value $B_{0thres}$ exceeds is inspected, so that the optimal value of can be determined. Similarly, whether or not the value of $B_1 \lambda^{3/2+k/2} /2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of f$^{(m,s)}$ is stopped and then the computation of f$^{(m,s+1)}$ is started when $\lambda$ exceeded 0.1. That is because the computation of submappings is affected by the difference of mere 3 out of 255 levels in the pixel intensity when $\lambda > 0.1$, and it is difficult to obtain a correct result when $\lambda > 0.1$.

[1. 4. 2] Histogram h(l)

The examination of $C_f^{(m,s)}$ does not depend on the histogram h(l). The examination of the BC and its third condition may be affected by the h(l). k is usually close to 1 when ($\lambda$, $C_f^{(m,s)}$) is actually plotted. In the experiment, k=1 is used, that is, $B_0 \lambda^2$ and $B_1 \lambda^2$ are examined. If the true value of k is less than 1, $B_0 \lambda^2$ and $B_1 \lambda^2$ does not become constants and increase gradually by the factor of $\lambda^{(1-k)/2}$. If h(l) is a constant, the factor is, for example, $\lambda^{1/2}$. However, such a difference can be absorbed by setting the threshold $B_{0thres}$ appropriately.

Let us model the source image by a circular object with its center at$(x_0,y_0)$ and its radius r, given by:

$$p(i,j) = \begin{cases} \dfrac{255}{r} c(\sqrt{(i-x_0)^2 + (j-y_0)^2})...(\sqrt{(i-x_0)^2 + (j-y_0)^2} \le r) \\ 0...(otherwise) \end{cases}$$

$$--- (32)$$

and the destination image given by:

$$q(i,j) = \begin{cases} \dfrac{255}{r} c(\sqrt{(i-x_1)^2 + (j-y_1)^2})...(\sqrt{(i-x_1)^2 + (j-y_1)^2} \le r) \\ 0...(otherwise) \end{cases}$$

$$--- (33)$$

with its center at$(x_1,y_1)$ and radius r. Let c(x) has the form of c(x)=x$^k$. When the centers $(x_0,y_0)$ and $(x_1,y_1)$ are sufficiently far from each other, the histogram h(l) is then in the form of:

$$h(l) \propto rl^k (k \ne 0) \tag{34}$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \le k \le 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of η

The parameter η can also be automatically determined in the same manner. Initially, η is set to zero, and the final mapping $f^{(n)}$ and the energy $C_f^{(n)}$ at the finest resolution are computed. Then, after η is increased by a certain value Δη and the final mapping $f^{(n)}$ and the energy $C_f^{(n)}$ at the finest resolution are again computed. This process is repeated until the optimal value is obtained. η represents the stiffness of the mapping because it is a weight of the following equation (35).

$$E_{0(i,j)}^{(m,s)} = \left\| f^{(m,s)}(i,j) - f^{(m,s-1)}(i,j) \right\|^2 \qquad --- \quad (35)$$

When η is zero, $D_f^{(n)}$ is determined irrespective of the previous submapping, and the present submapping would be elastically deformed and become too distorted. On the other hand, when η is a very large value, $D_f^{(n)}$ is almost completely determined by the immediately previous submapping. The submappings are then very stiff, and the pixels are mapped to almost the same locations. The resulting mapping is therefore the identity mapping. When the value of η increases from 0, $C_f^{(n)}$ gradually decreases as will be described later. However, when the value of η exceeds the optimal value, the energy starts increasing as shown in Fig. 4. In Fig. 4, the x-axis represents η, and y-axis represents $C_f$.

The optimum value of η which minimizes $C_f^{(n)}$ can be obtained in this manner. However, since various elements affects the computation compared to the case of λ, $C_f^{(n)}$ changes while slightly fluctuating. This difference is caused because a submapping is re-computed once in the case of λ whenever an input changes slightly, whereas all the submappings must be re-computed in the case of η. Thus, whether the obtained value of $C_f^{(n)}$ is the minimum or not cannot be judged instantly. When candidates for the minimum value are found, the true minimum needs to be searched by setting up further finer interval.

[1. 5] Supersampling

When deciding the correspondence between the pixels, the range of $f^{(m,s)}$ can be expanded to R X R (R being the set of real numbers) in order to increase the degree of freedom. In this case, the intensity of the pixels of the destination image is interpolated, so that $f^{(m,s)}$ having the intensity at non-integer points

$$) V(q_{f^{(m,s)}(i,j)}^{(m,s)}) \qquad (36)$$

is provided. Namely, supersampling is performed. In its actual implementation, $f^{(m,s)}$ is allowed to take integer and half integer values, and

$$V(q_{(i,j)+(0.5,0.5)}^{(m,s)}) \qquad (37)$$

is given by

$$(V(q_{(i,j)}^{(m,s)}) + V(q_{(i,j)+(1,1)}^{(m,s)}))/2 \qquad (38)$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat's face is computed as shown in Figs. 20(a) and 20(b). The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of $f^{(m,s)}$ is determined at the top leftmost pixel $(i,j)=(0,0)$. The value of each $f^{(m,s)}$ $(i, j)$ is then determined while $i$ is increased by one at each step. When $i$ reaches the width of the image, $j$ is increased by one and $i$ is reset to zero. Thereafter, $f^{(m,s)}$ $(i,j)$ is determined while scanning the source image. Once pixel correspondence is determined for all the points, it means that a single mapping $f^{(m,s)}$ is determined.

When a corresponding point $q_{f(i,j)}$ is determined for $p_{(i,j)}$, a corresponding point $q_{f(i,j+1)}$ of $p_{(i,j+1)}$ is determined next. The position of $q_{f(i,j+1)}$ is constrained by the position of $q_{f(i,j)}$ since the position of $q_{f(i,j+1)}$ satisfies the BC. Thus, in this system, a point whose corresponding point is determined earlier is given higher priority. If the situation continues in which $(0,0)$ is always given the highest priority, the final mapping might be unnecessarily biased. In order to avoid this bias, $f^{(m,s)}$ is determined in the following manner in the base technology.

First, when $(s \bmod 4)$ is 0, $f^{(m,s)}$ is determined starting from $(0,0)$ while gradually increasing both $i$ and $j$. When $(s \bmod 4)$ is 1, it is determined starting from the top rightmost location while decreasing $i$ and increasing $j$. When $(s \bmod 4)$ is 2, it is determined starting from the bottom rightmost location while decreasing both $i$ and $j$. When $(s \bmod 4)$ is 3, it is determined starting from the bottom leftmost location while increasing $i$ and decreasing $j$. Since a concept such as the submapping, that is, a parameter $s$, does not exist in the finest n-th level, $f^{(m,s)}$ is computed continuously in two directions on the assumption that $s=0$ and $s=2$.

In the actual implementation, the values of $f^{(m,s)}(i,j)$ $(m=0,...,n)$ that satisfy the BC are chosen as much as possible, from the candidates $(k,l)$ by awarding a penalty to the candidates violating the BC. The energy $D_{(k,l)}$ of the candidate that violates the third condition of the BC is multiplied by $\phi$ and that of a candidate that violates the first or second condition of the BC is multiplied by $\phi$. In the actual implementation, $\phi=2$ and $\phi=100000$ are used.

In order to check the above-mentioned BC, the following test is performed as the actual procedure when determining $(k,l)=f^{(m,s)}$ $(i,j)$. Namely, for each grid point $(k,l)$ in the inherited quadrilateral of $f^{(m,s)}$ $(i,j)$, whether or not the z-component of the outer product of

$$W = \vec{A} \times \vec{B} \tag{39}$$

is equal to or greater than 0 is examined, where

$$\vec{A} = \overrightarrow{q^{(m,s)}_{f^{(m,s)}(i,j-1)}\, q^{(m,s)}_{f^{(m,s)}(i+1,j-1)}} \tag{40}$$

$$\vec{B} = \overrightarrow{q^{(m,s)}_{f^{(m,s)}(i,j-1)}\, q^{(m,s)}_{(k,l)}} \tag{41}$$

Here, the vectors are regarded as 3D vectors and the z-axis is defined in the orthogonal right-hand coordinate system. When W is negative, the candidate is awarded a penalty by multiplying $D^{(m,s)}_{(k,l)}$ by $\phi$ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}$ $(i,j+1)$ for the adjacent pixel at $(i,j+1)$, there is no pixel on the source image plane that satisfies the BC if the z-component of W is negative because then $q^{(m,s)}_{(k,l)}$ passes the boundary of the adjacent quadrilateral.

[1. 7. 1] The order of submappings

In the actual implementation, $\sigma(0)=0$, $\sigma(1)=1$, $\sigma(2)=2$, $\sigma(3)=3$, $\sigma(4)=0$ were used when the resolution level was even, while $\sigma(0)=3$, $\sigma(1)=2$, $\sigma(2)=1$, $\sigma(3)=0$, $\sigma(4)=3$ were used when the resolution level was odd. Thus, the submappings are shuffled in an approximately manner. It is to be noted that the submapping is primarily of four types, and $s$ may be any one among 0 to 3. However, a processing with $s=4$ was actually performed for the reason described later.

[1. 8] Interpolations

After the mapping between the source and destination images is determined, the intensity values of the corresponding pixels are interpolated. In the implementation, trilinear interpolation is used. Suppose that a square

$p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+1,j+1)}q_{f(i,j+1)}$ on the destination image plane. For simplicity, the distance between the image planes is assumed 1. The intermediate image pixels r(x,y,t) ($0{\leq}x{\leq}$ N-1, $0{\leq}y{\leq}$M-1) whose distance from the source image plane is t ($0{\leq}t{\leq}1$) are obtained as follows. First, the location of the pixel r(x,y,t), where x,y,t∈R, is determined by the equation (42).

$$(x,y)=(1-dx)(1-dy)(1-t)(i,j)+(1-dx)(1-dy)tf(i,j)$$

$$+dx(1-dy)(1-t)(i+1,j)+dx(1-dy)tf(i+1,j)$$

$$+(1-dx)dy(1-t)(i,j+1)+(1-dx)dytf(i,j+1)$$

$$+dxdy(1-t)(i+1,j+1)+dxdytf(i+1,j+1) \tag{42}$$

The value of the pixel intensity at r(x,y,t) is then determined by the equation (43).

$$V(r(x,y,t)) = (1-dx)(1-dy)(1-t)V(p_{(i,j)})+(1-dx)(1-dy)tV(q_{f(i,j)})$$

$$+dx(1-dy)(1-t)V(p_{(i+1,j)})+dx(1-dy)tV(q_{f(i+1,j)})$$

$$+(1-dx)dy(1-t)V(p_{(i,j+1)})+(1-dx)dytV(q_{f(i,j+1)})$$

$$+dxdy(1-t)V(p_{(i+1,j+1)})+dxdytV(q_{f(i+1,j+1)}) \tag{43}$$

where dx and dy are parameters varying from 0 to 1.

[1. 9] Mapping on which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$p(i_0,j_0),p(i_1,j_1),...,p(i_{n_s-1},j_{n_s-1}) \tag{44}$$

of the source image are specified, the following values in the equation (45) are determined.

$$F^{(n)}(i_0,j_0)=(k_0,l_0),$$

$$F^{(n)}(i_1,j_1)=(k_1,l_1),...,$$

$$F^{(n)}(i_{n_s-1},j_{n_s-1})=(k_{n_s-1},l_{n_s-1}) \tag{45}$$

For the remaining pixels of the source image, the amount of displacement is the weighted average of the displacement of $p(i_h,j_h)$ (h=0,..., $n_s$ -1). Namely, a pixel $p_{(i,j)}$ is mapped to the following pixel (expressed by the equation (46)) of the destination image.

$$F^{(m)}(i,j) = \frac{(i,j) + \sum_{h=0}^{h=n_s-1}(k_h - i_h, l_h - j_h)weight_h(i,j)}{2^{n-m}} \qquad --- \quad (46)$$

where

$$weight_h(i,j) = \frac{1/\|(i_h - i, j_h - j)\|^2}{total\_weight(i,j)} \qquad (47)$$

where

$$total\_weight(i,j) = \sum_{h=0}^{h=n_s-1} 1/\|(i_h - i, j_h - j)\|^2 \qquad --- \quad (48)$$

Second, the energy $D_{(i,j)}^{(m,s)}$ of the candidate mapping f is changed so that mapping f similar to $F^{(m)}$ has a lower energy. Precisely speaking, $D_{(i,j)}^{(m,s)}$ is expressed by the equation (49).

$$D_{(i,j)}^{(m,s)} = E_{0(i,j)}^{(m,s)} + \eta E_{1(i,j)}^{(m,s)} + KE2_{0(i,j)}^{(m,s)} \qquad (49)$$

$$E_{2(i,j)}^{(m.s)} = \begin{cases} 0, & if \left\|F^{(m)}(i,j) - f^{(m,s)}(i,j)\right\|^2 \leq \left\lfloor \dfrac{\rho^2}{2^{2(n-m)}} \right\rfloor \\ \left\|F^{(m)}(i,j) - f^{(m,s)}(i,j)\right\|^2, & otherwise \end{cases} \qquad --- \quad (50)$$

where $\kappa$, $\rho \geqq 0$. Finally, the mapping f is completely determined by the above-described automatic computing process of mappings.

Note that $E_{2(i,j)}^{(m,s)}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \qquad --- \quad (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.
Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.
Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n \times 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images p(m, 0) through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} \times 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C_f^{(m,s)}$ concerning a pixel value, introduced in [1.3.2.1], and the energy $D_f^{(m,s)}$ concerning the smoothness of the mapping introduced in [1.3.2.2]. Next, by combining these evaluation equations, a combined evaluation equation is set (S31). Such the combined evaluation equation includes $\lambda C_{(i,j)}^{(m,s)} + D_f^{(m,s)}$. Using $\eta$ introduced in [1.3.2.2], we have

$$\sum \sum (\lambda C_{(i,j)}^{(m,s)} + \eta E_{0(i,j)}^{(m,s)} + E_{1(i,j)}^{(m,s)}) \qquad --- \quad (52)$$

In the equation (52) the sum is taken for each i and j where i and j run through 0, 1,..., $2^{m-1}$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter $\eta$ and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can

EP 1 261 212 A2

been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

1. An upper left point a, an upper right point b, a lower left point c and a lower right point d with respect to the point x are obtained at the first level of resolution.

2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.

3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.

4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.

5. The corresponding points b' to d' are plotted by using the same method as the above 4 so as to produce an inherited quadrilateral defined by the points a' to d'.

6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta=0)$ because it has been determined relative to $\eta=0$.

Next, to obtain the mapping with respect to other different $\eta$, $\eta$ is shifted by $\Delta\eta$ and m is reset to zero (S24). After confirming that new $\eta$ does not exceed a predetermined search-stop value $\eta_{max}$(S25), the process returns to S21 and the mapping $f^{(n)}$ ($\eta=\Delta\eta$) relative to the new $\eta$ is obtained. This process is repeated while obtaining $f^{(n)}(\eta=i\Delta\eta)$ ($i$=0,1,...) at S21. When $\eta$ exceeds $\eta_{max}$, the process proceeds to S26 and the optimal $\eta=\eta_{opt}$ is determined using a method described later, so as to let $f^{(n)}$ ($\eta=\eta_{opt}$) be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping $f^{(m,s)}$ that minimizes the energy with respect to the then $\lambda$ (and, implicitly, $\eta$) (S211), and the thus obtained is denoted as $f^{(m,s)}$ ($\lambda=0$). In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ ($\lambda=\Delta\lambda$) relative to the new $\lambda$ is obtained. This process is repeated while obtaining $f^{(m,s)}$ ($\lambda=i\Delta\lambda$) ($i$=0,1,...). When $\lambda$ exceeds $\lambda_{max}$, the process proceeds to S214 and the optimal $\lambda=\lambda_{opt}$ is determined , so as to let $f^{(n)}$ ($\lambda=\lambda_{opt}$) be the final mapping

$f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m,0)}$ is renewed utilizing $f^{(m,3)}$ as described above and a submapping at that level is determined.

Fig. 16 shows the behavior of the energy $C_f^{(m,s)}$ corresponding to $f^{(m,s)}$ ($\lambda=i\Delta\lambda$) ($i$=0,1,...) for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda>\lambda_{opt}$, the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}$($\eta=i\Delta\eta$)($i$=0,1,....) while varying $\eta$ . Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot}=\alpha E_0+E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0+\beta E_1$, for instance, may be taken up as the combined evaluation equation, where $\alpha+\beta=1$ is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

**Image Data Coding Technology**

An image data coding technology utilizing the above-described base technology will be described here. This technology was proposed in the pending Japanese Patent Application No. 2001-21098 owned by the same assignee. The contents thereof will be briefly described first and then novel and advantageous processings according to the present invention will be described in the section "Preferred Embodiments for Image Data Coding and Decoding Techniques."

Fig. 18 is a conceptual diagram showing a processing for coding image data. Here, it is assumed that the image data comprise a key frame and an intermediate frame which is other than the key frame. The key frame may be determined from the outset, or may be so determined when coded. In the latter case, first image data may be a usual moving picture or a medical image or the like formed simply by a plurality of frames.

The process for determining the key frame is omitted. Suppose that two key frames (KF) 200 and 202 are given. The process is performed in a manner such that a matching between these key frames is computed so as to generate a virtual intermediate frame (VIF) 204. Such processes are described in detail in the base technology. However, in the base technology, the two key frames to which the matching is computed are expressed as the source image and the destination image. The "virtual intermediate frame (VIF)" is not an intermediate frame actually included in the initial image data sets (that is, the actual intermediate frame) but a frame obtained from the key frames based on the matching computation.

Next, an actual intermediate frame (AIF) 206 is coded using the virtual intermediate frame VIF 204. If the actual intermediate frame AIF 206 is located at a point which interior-divides the two key frames KF 200 and 202 by a ratio t:(1-t), then the virtual intermediate frame VIF 204 is similarly interpolated on the same assumption that VIF 204 is located at the point which interior-divides the key frames 200 and 202 by the ratio t:(1-t). This is interpolated by the trilinear method (see [1.8] in the base technology) using a quadrilateral or the like whose vertices are the corresponding points (namely, interpolated in the two directions x and y). Moreover, a technique other than the trilinear may be used here. For example, the interpolation may be performed on simply between the corresponding points without considering the quadrilateral.

The coding of the actual intermediate frame AIF 206 is realized such that a difference image DI 210 between the AIF 206 and the virtual intermediate frame VIF 204 is processed by the entropy coding (such as the Huffman coding and arithmetic coding), a JPEG coding using the DCT (Discrete Cosine Transform), dictionary based compression or the run-length coding, and so forth. Final coded data of the image data (hereinafter also simply referred to as coded image data) are acquired as a combination of the coded data of the difference image relating to this intermediate frame (hereafter simply referred to as coded data of the intermediate frame) and the key frame data.

In the above method, the same virtual intermediate frames are obtained from the key frames by providing the same matching mechanism in both a coding side and a decoding side. Thus, when coded data of the intermediate frame are acquired in addition to the key frame data, original data can be restored in the decoding side. The difference image also can be effectively compressed by using the Huffman coding or other coding methods. It is to be noted that the key frame itself may be intra-frame compressed. Both the intermediate frames and key frames may be compressed by either the lossless or lossy method, and may be structured such that such the compression method can be designated thereto.

Fig. 19 shows a structure of an image data coding apparatus 10 which realizes the above-described coding processes. Each functional unit can be realized by, for example, a program loaded from a recording medium such as CD-ROM in a PC (personal computer). The same thing applies to a decoding apparatus described later. Fig. 20 is a flowchart showing processings carried out by the image data coding apparatus 10.

An image data input unit 12 inputs image data to be coded, from a network, storage or the like (S1010). An optical equipment having communication capability, storage controlling capability or which photographs images may serve as the image data input unit 12.

A frame separating unit 14 separates frames included in the image data, into key frames and intermediate frames (S1012). A key frame detecting unit 16 detects as the key frame among a plurality of the frames, one whose image difference from the immediately prior frame is relatively large. Using this selection procedure, the differences among key frames does not become unwieldily large and coding efficiency improves. It is to be noted that the key frame detecting unit 16 may select a frame at constant intervals so as to select it as the key frame. In this case, the procedure becomes very simple. The separated key frames 38 are sent to an intermediate frame generating unit 18 and a key frame compressing unit 30. Frames other than the key frames, that are actual intermediate frames 36, are sent to an intermediate frame coding unit 24.

The key frame compressing unit 30 compresses the key frames, and outputs the compressed key frames to a coded data generating unit 32. A matching computation unit 20 in the intermediate frame generating unit 18 computes the matching between the key frames by utilizing the base technology or other available technique (S1014), and a frame interpolating unit 22 in the intermediate frame generating unit 18 generates a virtual intermediate frame 34 based on the computed matching (S1016). The virtual intermediate frame 34 thus generated is supplied to the intermediate frame coding unit 24.

A comparator 26 in the intermediate frame coding unit 24 takes a difference between the virtual intermediate frame 34 and the actual intermediate frame 36, and then a difference coding unit 28 codes this difference so as to produce coded data 40 of the intermediate frame (S1018). The coded data 40 of the intermediate frame are sent to the coded data generating unit 32. The coded data generating unit 32 generates and outputs final coded image data by combining the coded data 40 of the intermediate frame and the compressed key frames 42 (S1020).

Fig. 21 shows an example of the structure of coded image data 300. The coded image data 300 includes (1) an image index region 302 which stores an index such as a title and ID of the image data for identifying the image data, (2) a reference data region 304 which stores data used in a decoding processing, (3) a key frame data storing region 306 and (4) a coded data storing region 308 for the intermediate frames, and are so structured that all (1) to (4) are integrated. As the reference data region 304, there are various parameters such as a coding method and a compression rate or the like. In Fig. 21 there are shown KF 0, KF 10, KF 20,... as examples of the key frames, and CDI's (Coded Difference Images) 1 - 9 and 11 - 19 related to frames other than the key frames as examples of the coded data of the intermediate frames. This completes the description of the processing performed at the coding side.

On the other hand, Fig. 22 shows a structure of an image data decoding apparatus 100. Fig. 23 is a flowchart showing processes carried out by the image data decoding apparatus 100. The image data decoding apparatus 100 decodes the coded image data obtained by the image data coding apparatus 10 to obtain the original image data.

A coded image data input unit 102 acquires coded image data from the network, storage, and so forth. (S1050). A coded frame separating unit 104 separates a compressed key frame 42 included in the encoded image data, from other supplementary data 112 (S1052). The supplementary data 112 include coded data of the intermediate frames. The compressed key frame 42 is sent to a key frame decoding unit 106 and is decoded there (S1054). On the other hand, the supplementary data 112 are sent to a difference decoding unit 114, and a difference image decoded by the difference decoding unit 114 is sent to an adder 108.

A key frame 88 outputted from the key frame decoding unit 106 is sent to a decoded data generating unit 110 and an intermediate frame generating unit 18. The intermediate frame generating unit 18 generates a virtual intermediate frame 34 (S1058) via the same matching processing as in the coding process (S1056). The virtual intermediate frame 34 is sent to the adder 108, so that the intermediate frame 34 is summed up with the decoded difference image 116. As a result of the summation, an actual intermediate frame 36 is decoded (S1060) and is then sent to the decoded data generating unit 110. The decoded data generating unit 110 decodes image data by combining the actual intermediate data 36 and the key frame 38 (S1062).

By implementing the above image coding and decoding schemes, the virtual intermediate frames are produced using the pixel-by-pixel matching, so that a relatively high compression rate is achieved while maintaining the image quality. In the actual initial experiment, a higher compression rate was achieved at the same level of subjective image quality, compared to a case where all frames are uniformly compressed by JPEG.

As a modified example for the above embodiments, an idea concerning the error control may be introduced. Namely, it is the control that suppresses the error between the coded image data and the original image data, within a certain range. The sum of squares of intensity values of the corresponding pixels in two images in terms of their positions serve as an evaluation equation for the error. Based on this error, the coding method and compression rate of the intermediate frame and key frame can be adjusted, or the key frames can be selected anew. For example, when the error relating to a certain intermediate frame exceeds an allowable value, a key frame can be provided anew in the vicinity of the intermediate frame or the interval between two key frames interposing the intermediate frame can be made smaller.

As another modified example, the image data coding apparatus 10 and the image data decoding apparatus 100 may be structured integrally. In that case, the structure can be shared around the intermediate frame generating unit 18 which serves as a central unit. The integrated image coding-decoding apparatus codes the images and stores them in a storage, and decodes them, when necessary, so as to be displayed and so forth.

As still another modified example, the image data coding apparatus 10 may be structured such that a processing thereof starts from the input of the virtual intermediate frame generated outside the apparatus 10. In this case, the image data coding apparatus 10 can be structured only by the intermediate frame coding unit 24, coded data generating unit 32 shown in Fig. 19 and/or the key frame compressing unit 30 (if necessary). The still another modified examples may further include other cases depending on how other unit/units is/are provided outside the apparatus 10 to a relatively high degree of freedom understood to those skilled in the art.

Similarly, the image data decoding apparatus 100 may be structured such that a processing thereof starts from the inputs of the key frame, virtual intermediate frame and coded data of the intermediate frame generated outside the apparatus 100. In this case, the image data decoding apparatus 100 can be structured only by the difference decoding unit 114, adder 108 and decoded data generating unit 110 shown in Fig. 22. The same high degree of freedom in designing the structure of the image data decoding apparatus 100 exists as in the image data coding apparatus 10.

The above-described embodiments are described with the emphasis on the pixel-by-pixel matching. However, the image data coding techniques according to the present embodiments are not limited thereto, and include the processes of obtaining the virtual intermediate frames through the processing performed between the key frames as well as a technique as a whole including these processings as a preprocessing. A block matching may be computed between key frames. Moreover, arbitrary linear or nonlinear processing may be carried out for generating the virtual intermediate frame. The same things may be applied at the decoding side. It is to be noted that one of key points in implementing the techniques lies in a point

where the virtual intermediate frame obtained in the same method is presupposed at both the coding side and decoding side as a general rule. However, this is not absolutely necessary, and the decoding side may function following a rule adopted in the coding process, or the coding side may perform the coding while presupposing the processing at the decoding side.

**Preferred Embodiments for Image Data Coding and Decoding Techniques**

In the coding and decoding techniques according to the present invention (hereinafter referred to as "extended technology"), the above-described coding and decoding techniques for the intermediate frame is also applied to the key frames. In the Japanese Patent Application 2001-21098, the key frames are intra-frame compressed at most, and classification was absent among the key frames. In the extended technology, the key frames are hierarchized as well. Namely, key frames are classified into independent key frames which can be decoded without referring to other frames, and dependent key frames which are other than the independent key frame.

The dependent key frames are coded by coding a difference between a virtual frame generated based on a matching between independent frames, and an actual frame. On the other hand, the intermediate frame is coded based on the matching between the actual key frames. Namely, the intermediate frames are processed according the technique disclosed in the Japanese Patent Application No. 2001-21098.

In the Japanese Patent Application No. 2001-21098, the same matching function is implemented at both the coding and decoding sides. However, the present embodiments are not limited to this. For example, a matching result computed at the coding side may be stored in the corresponding point file, and this matching result stored in the corresponding point file may be handed over to the decoding side. In that case, computational load at the decoding side can be reduced.

Fig. 24 is a conceptual diagram showing a processing in which the image data are coded according to the extended technology. What differs from Fig. 18 is that this processing is performed between key frames only. Now, a third key frame actually exists in between a first key frame 400 and a second key frame 402. Here, the first and second key frames 400 and 402 are independent key frames whereas the third key frame is a dependent key frame, so that a virtual third key frame VKF 404 is first generated based on the matching between the first and second key frames (KF 400 and KF 402). Then, a difference image DI 410 between this virtual third key frame VKF 404 and an actual key frame AKF 406 is coded. The coded image data include the following data D1 - D4.

D1:    Independent key frame data.
D2:    Coded data of dependent key frames.
D3:    Coded data of an intermediate frame.
D4:    A file of corresponding points between actual key

frames.

D1 may be compression-coded. Here in the present patent specification, even in a case of the absence of the explicit expression that data are compressed or coded, arbitrary compression or coding may be performed on arbitrary data. D2 are coded data of a difference image. D3 are generated based on actual key frames. D4 is optional as described before. It is to be noted here that since D4 is used for decoding both independent key frames and intermediate frames, the extended technology is advantageous in terms of efficiency.

Fig. 25 shows a structure of an image data coding apparatus 10 which realizes a coding process. Fig. 25 differs from Fig. 19, first of all, in that, the intermediate frame generating unit 18 becomes just a frame generating unit 418. In the frame generating unit 418, not only intermediate frames but also virtual key frames are generated for coding dependent key frames. The virtual key frames and the intermediate frames 434 are sent to a frame coding unit 424. In the frame coding unit 424, not only intermediate frames but also dependent key frames are coded. Thus, actual intermediate frames and actual key frames 436 are inputted to the frame coding unit 424. An independent key frame compressing unit 430 intra-frame compresses and codes independent key frames only, among the key frames.

Fig. 26 schematically shows a procedure in which the dependent key frames and the intermediate frames are coded by utilizing the actual key frames. In Fig. 26, "KF" and "AKF" are both actual key frames, and "AIF" and "VIF" are an actual intermediate frame and a virtual intermediate frame, respectively, and "VKF" is a virtual key frame. Referring to Fig. 26, the virtual key frame VKF is generated from the actual key frames KF's, and then the dependent key frame AKF is coded based on the thus generated virtual key frame VKF. On the other hand, the virtual intermediate frame VIF is also generated from said two key frames KF's, and the actual intermediate frame AIF is coded based on the thus generated virtual intermediate frame VIF. In other words, a single matching between the key frames realizes coding of another key frame and an intermediate frame.

It is to be noted that, as for the dependent frame, either interpolation or extrapolation may be utilized based on two independent key frames. In general, extrapolation can be utilized when key frames come in the sequence of, for example, an independent frame, an independent frame and a dependent frame whereas interpolation can be utilized when the key frames come in the order of, for example, an independent frame, a dependent frame and an independent frame.

In Fig. 26, another one dependent key frame is coded from the two independent key frames KF's. However, the most of or all of the key frames can be actually coded as dependent key frames by repeating to perform the matching on two adjacent key frames. In particular, if the difference image is coded by the lossless method, the dependent key frames are completely restored to the original key frames. Thus, certain dependent key frames can be used to code other dependent key frames. In short, a question is whether a concept similar to GOP which serves as a unit for random access as in the case of MPEG is adopted or not. In this connection, a design may be such that dependence of key frames is closed for every predetermined interval. In any case, the extended technology is very advantageous in that the key frames can also be coded at high compressibility. The essential feature of the extended technology accounts for the fact that matching accuracy is high in the base technology and that similarity of images between key frames is high to some extent.

Fig. 27 is a flowchart showing processings carried out by the image data coding apparatus 10. Fig. 27 differs from Fig. 20 in that the virtual key frame and intermediate frame are generated (S2016) after the matching of key frames has been computed (S1014). Thereafter, these are coded (S2018), and a stream of final coded image data is generated and outputted.

Fig. 28 is a structural example of the coded image data 300. Fig. 28 differs from Fig. 21 in that there is provided an independent key frame data region 326 in place of the key frame data region 306 and there is provided a coded frame region 328 which includes coded data for key frames, in place of the coded intermediate frame region 308.

On the other hand, Fig. 29 shows a structure of an image data decoding apparatus 100. Fig. 29 differs from Fig. 22 in that the key frame decoding unit 106 becomes an independent key frame decoding unit 506 which reproduces first the independent key frames alone by the intra-fame decoding method. An independent key frame 538 is inputted to a frame generating unit 518, and a virtual dependent key frame is first generated. Data 534 of this virtual dependent key frame is summed up with the difference image 116 decoded by the difference decoding unit 114, so that an actual dependent key frame is decoded.

The actual dependent key frame 540 is fed back to the frame generating unit 518, and at this stage all key frames are complete. Thereafter, the intermediate frame is decoded through the similar processing to that shown in Fig. 29, so that all frames will be complete.

Though in this example the image data decoding apparatus 100 itself too performs the matching processing, the data decoding apparatus may be structured such that the corresponding point file between key frames is acquired from the coding side. In that case, the matching computation unit 20 will not be necessary in the image data decoding apparatus 100. Though the corresponding point file may be embedded in any arbitrary place among a stream of the coded image data, here it is, for example, embedded in part of coded data of the dependent key frame.

Fig. 30 is a flowchart showing processings carried out by the image data decoding apparatus 100. Fig. 30 differs from Fig. 23 in that the independent key frames are first decoded (S2054) and the matching is computed therebetween (S2056) in the extended technology. Thereafter, a virtual key frame is first generated (S2058). The thus generated virtual key frame is combined with a difference image, so that an actual key frame is decoded (S2060). Next, all the key frames are utilized in sequence so as to be generate virtual intermediate frames (S2062). The thus generated virtual intermediate frame is combined with a difference image, so that an actual intermediate frame is decoded (S2064).

The above description has shown coding and decoding of key frames and intermediate frames by the extended technology. It is to be cautioned that there are also modifications and variations for the extended technology in a same manner as was in the Japanese Patent Application 2001-21098. It goes without saying that the base technology may or may not be used in the matching computation in the extended technology.

Next, modified examples for the present embodiments will be described.

Modifications

So far, the third key frame has been provided as a virtual one while the first key frame and the second key frame are regarded as independent key frames, and a difference between this third key frame and the actual third key frame is coded. Now, as a new coding method, the first key frame only is regarded as the independent key frame here, then performed are (1) a step of computing a matching between this first key frame and the second key frame, (2) a step of generating a virtual second key frame based on a result of the step (1) and the first key frame, and (3) a step of coding an actual second key frame by utilizing the virtual second key frame. Namely, the second key frame is regarded also as a dependent key frame and is coded based on correspondence information between the second key frame itself and the first key frame. Specifically, each pixel of the first key frame is moved according to information on the corresponding points, so as to generate the virtual second key frame. Next, the difference between this virtual second key frame and the actual second key frame is entropy-coded and then compressed.

By implementing this method, after the information on the corresponding points is determined, data of the second key frames are not referred to temporarily. Thus, the virtual second key frame is generated by moving each pixel of the first key frame according to the information on the corresponding points. At this stage, color of pixels can not be reflected among data on the second key frames. However, the color of pixels is reflected at the above-described stage of the difference data. The difference data may be coded by either the lossless or lossy method. The coded data stream is generated by combining and effecting the first key frame, the coded second key frame and information on the corresponding points, and is then outputted.

Describing in terms of the image data coding apparatus 10 shown in Fig. 25, the frame generating unit 418 generates a virtual key frame which relates to the second key frame. The frame coding unit 424 codes a difference between the virtual second key frame and the actual second key frame. The independent key frame compressing unit 430 intra-frame compresses and codes the first key frame only.

The decoding that corresponds to the above-described coding is also possible. Namely, this decoding method includes: (1) a step of acquiring coded data stream which stores data of the first key frame and data of the second key frame which is coded based on information on corresponding points between the first and second key frames; (2) a step of decoding the second key frame from the thus acquired coded data stream; and (3) a step of generating an intermediate frame between the first key frame and the second key frame, by utilizing the first key frame, decoded second key frame and corresponding point data.

Describing in terms of the image data decoding apparatus 100 shown in Fig. 29, the first key frame is reproduced at the independent key frame decoding unit 506 by the intra-frame decoding method. The independent key frame 538 is inputted to the frame generating unit 518, so that the virtual second key frame is generated first. This data 534 is summed up with the difference image 116 which is decoded by the difference decoding unit 114, so that the actual second key frame is decoded.

This actual second key frame 540 is fed back to the frame generating unit 518. Thereafter, the intermediate frame between the first key frame and the second key frame is decoded, and thus all frames are prepared.

It is to be noted that difference data on color between corresponding pixels of the first key frame and the second key frame may be incorporated into the corresponding point data. In that case, color of the second key frame can be also considered at the time of generating the virtual second key frame. Whether the color is to be considered at such an early stage or it is to be added at a later stage may be selectable.

Although the present invention has been described by way of exemplary embodiments, it should be understood that many changes and substitutions may be made by those skilled in the art without departing from the scope of the present invention which is defined by the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Further inventive features of the present embodiments Further inventive features of the present embodiments are defined in the following paragraphs:

1. A method of coding image data in which the image frame data are separated into a key frame and an intermediate frame so as to be coded, the method characterized in that the intermediate frame is coded based on a result of matching between key frames, and at least part of the key frames, too, are coded based on a result of matching between other key frames.

2. An image decoding method, comprising:

acquiring a coded data stream which stores data of first and second key frames, data of a third key frame coded based on a result of a matching therebetween, and corresponding point data obtained as a result of computation of a matching between adjacent key frames among the first, second and third key frames; decoding the third key frame from the acquired coded data stream; and generating an intermediate frame based on the corresponding point data.

3. An image decoding apparatus, comprising:

a unit which acquires a coded data stream which stores data of first and second key frames and data of a third key frame coded based on a result of a matching between the first and second key frames; a unit which decodes the third key frame from the acquired coded data stream; and a unit which computes a matching between adjacent key frames among the first, second and third key frames, and thereby generates an intermediate frame.

4. A method of coding image data, comprising:

separating key frames included in the image data, into a key frame and an intermediate frame; generating a series of source hierarchical images of different resolutions by operating a multiresolutional critical point filter on a first key frame obtained by said separating; generating a series of destination hierarchical images of different resolutions by operating the multiresolutional critical point filter on a second key frame obtained by said separating; computing a matching of the source hierarchical images and the destination hierarchical images in a resolutional level hierarchy; generating a virtual third key frame based on a result of the matching; and coding an actual third key frame included in the image data, by utilizing the virtual third key frame.

5. An image data coding apparatus, comprising:

a first functional block which acquires a virtual key frame generated based on a result of a matching performed between key frames included in image data; and a second functional block which codes an actual key frame included in the image data, by utilizing the virtual key frame.

6. An image data coding apparatus according to Paragraph 5, further comprising:

a third functional block which computes a matching between adjacent key frames including the actual key frame and which codes an intermediate frame that is other than the key frames.

7. An image decoding method, comprising:

acquiring first and second key frames included in a coded data stream of image data, and a third key frame which is coded based on a result of a processing performed between the first and second key frames and which is different from the first and second key frames; decoding the thus acquired coded third key frame; and generating an intermediate frame that is other than key frames by performing a processing between a plurality of key frames including the third key frame obtained as a result of said decoding.

8. An image decoding apparatus, comprising:

a first functional block which acquires first and second key frames included in a coded data stream of image data, and a third key frame which is coded based on a result of a processing performed between the first and second key frames and which is different from the first and second key frames; a second functional block which decodes the thus acquired coded third key frame; and a third functional block which generates an intermediate frame that is other than key frames by performing a processing between a plurality of key frames including the third key frame obtained in said third functional block.

9. A method of coding image data, comprising:

computing a matching between first and second key frames included in the image data;

generating a virtual second key frame based on a result of the matching and the first key frame; and coding an actual second key frame by utilizing the virtual second key frame.

10. A method according to Paragraph 9, wherein said coding includes compressing a difference between the actual second key frame and the virtual second key frame.

11. A method according to Paragraph 9, further comprising:

incorporating the first key frame, coded second key frame and corresponding point data obtained as a result of the matching into the coded data stream, so as to be outputted.

12. An image data coding apparatus, comprising:

a unit which acquires image data including a plurality of frames;
a unit which computes a matching between first and second key frames included in the acquired image data;
a unit which generates a virtual second key frame based on a result of the matching and the first key frame; and
a unit which codes an actual second key frame by utilizing the virtual second key frame.

13. An image decoding method, comprising:

acquiring a coded data stream which stores data of a first key frame and a second key frame which is coded based on a result of a matching between the first and second key frames;
decoding the second key frame from the acquired coded data stream; and
generating an intermediate frame between the first key frame and the second key frame, by utilizing the first key frame, decoded second key frame and a result of the matching.

14. An image decoding apparatus, comprising:

a unit which acquires a coded data stream which stores data of a first key frame and a second key frame which is coded based on a result of a matching between the first and second key frames;
a unit which decodes the second key frame from the coded data stream acquired by said acquiring unit; and
a unit which generates an intermediate frame between the first key frame and the second key frame, by utilizing the first key frame, decoded second key frame and a result of the matching.

**Claims**

1. A method of coding image data, comprising:

a primary matching by which to compute a matching between a first key frame and a second key frame included in the image data;
generating a virtual third key frame based on a result of the primary matching;
coding an actual third key frame included in the image data, by utilizing the virtual third key frame; and
a secondary matching by which to compute a matching between adjacent key frames among the first, second and actual third key frames.

2. A method according to Claim 1, wherein said primary matching includes computing, pixel by pixel, a matching between the first key frame and the second key frame, and said generating includes generating the virtual third key frame by performing, pixel by pixel, an interpolation computation based on a correspondence relation of position and intensity of pixels between the first and second key frames.

3. A method according to Claim 1, further comprising:

outputting, as a coded data stream, the first and second key frames, the coded third key frame and corresponding point data obtained as a result of said secondary matching.

4. A method according to Claim 3, wherein the coded third key frame is generated in such a manner that the coded third key frame includes data of a difference between the virtual third key frame and the actual third key frame.

**5.** A method according to Claim 4, wherein the coded third key frame is generated in such a manner that the coded third key frame further includes corresponding point data obtained as a result of said primary matching.

**6.** An image data coding apparatus (10), comprising:

a unit (12) which acquires image data including a plurality of frames;
a unit (20) which computes a primary matching between first and second key frames included in the acquired image data;
a unit (18, 418) which generates a virtual third key frame based on a result of the primary matching;
a unit which codes an actual third key frame by utilizing the virtual third key frame; and
a unit (20) which computes a secondary matching between adjacent key frames among the first, second and actual third key frames.

**7.** An image data coding apparatus (10) according to Claim 6, wherein the first, second and third key frames are arranged in this temporal order, and said generating unit generates the virtual third key frame by extrapolation.

**8.** An image data coding apparatus (10) according to Claim 6, wherein the first, third and second key frames are arranged in this temporal order, and said generating unit generates the virtual third key frame by interpolation.

**9.** An image data coding apparatus (10) according to Claim 6, wherein said coding unit (24, 424) codes a difference between the virtual third key frame and the actual third key frame.

**10.** An image data coding apparatus (10) according to Claim 6, wherein said secondary-matching computing unit (20) computes a pixel-by-pixel matching between the adjacent key frames.

**11.** An image data coding apparatus (10) according to Claim 6, wherein said generating unit (18, 418) computes a pixel-by-pixel matching between the first and second key frames, and generates the virtual third key frame by performing an interpolation computation based on a result thereof.

**12.** An image data coding apparatus (10) according to Claim 6, further comprising:

a unit (32) which outputs the first and second key frames, the coded third key frame and data obtained as a result of the secondary matching, as a coded data stream.

**13.** An image data coding apparatus (10) according to Claim 6, wherein the coded third key frame is generated in such a manner that the coded third key frame includes data of a difference between the virtual third key frame and the actual third key frame.

**14.** An image data coding apparatus (10) according to Claim 6, wherein the coded third key frame is generated in such a manner that the coded third key frame further includes corresponding point data obtained as a result of the primary matching.

**15.** An image data coding apparatus (10) according to Claim 6, wherein the coded data stream stores a result of the secondary matching as corresponding point data.

**16.** An image data coding apparatus (10) according to Claim 6, wherein said coding unit (24, 424) further codes an actual intermediate frame by utilizing a virtual intermediate frame generated based on a result of the secondary matching.

**17.** An image data coding apparatus (10) according to Claim 16, wherein said coding unit (24, 424) codes a difference between the virtual intermediate frame and the actual intermediate frame.

**18.** Computer software having program code for carrying out a method according to claim 1.

**19.** An image decoding method, comprising:

acquiring a coded data stream which stores data of first and second key frames and data of a third key frame coded based on a result of a matching between the first and second key frames;

decoding the third key frame from the acquired coded data stream; and
computing a matching between adjacent key frames among the first, second and third key frames, and thereby generating an intermediate frame.

**20.** A method according to Claim 19, wherein the coded third key frame data are generated by coding a difference between a virtual third key frame generated based on a matching computed between the first and second key frames, and an actual third key frame

**21.** A method according to Claim 20, wherein, in said decoding, after the virtual third key frame is generated by computing the matching between the first and second key frames, the actual third key frame is decoded based on the thus generated virtual third key frame.

**22.** A method according to Claim 19, wherein the coded third key frame data include corresponding point data which is a result of the matching computed between the first and second key frames, and coded data of a difference between a virtual third key frame to be generated based on the corresponding point data, and an actual third key frame.

**23.** A method according to Claim 22, wherein, in said decoding, after the virtual third key frame is generated based on the corresponding point data, the actual third key frame is decoded based on the thus generated virtual third key frame.

**24.** An image decoding apparatus (100), comprising:

a unit (102) which acquires a coded data stream which stores data of first and second key frames, data of a third key frame coded based on a result of a matching therebetween, and corresponding point data obtained as a result of computation of a matching between adjacent key frames among the first, second and third key frames;
a unit (106, 506) which decodes the third key frame from the acquired coded data stream; and
a unit (18, 518) which generates an intermediate frame based on the corresponding point data.

**25.** An image decoding apparatus (100) according to Claim 24, wherein the coded third key frame data are generated by coding a difference between a virtual third key frame generated based on a matching computed between the first and second key frames, and an actual third key frame

**26.** An image decoding apparatus (100) according to Claim 25,
wherein after the virtual third key frame is generated by computing the matching between the first and second key frames, said decoding unit (106, 506) decodes the actual third key frame based on the virtual third key frame.

**27.** An image decoding apparatus (100) according to Claim 24, wherein the coded third key frame data include corresponding point data which is a result of the matching computed between the first and second key frames, and coded data of a difference between a virtual third key frame to be generated based on the corresponding point data, and an actual third key frame.

**28.** An image decoding apparatus (100) according to Claim 27, wherein after the virtual third key frame is generated based on the corresponding point data, said decoding unit (106, 506) decodes the actual third key frame based on the virtual third key frame.

**29.** Computer software having program code for carrying out a method according to claim 19.

**30.** A coded image data structure, comprising:

an index region which identifies image data;
a reference data region which stores data used in a decoding processing;
an independent frame data region which stores data relating to independent frames which are coded independent of other frames; and
a coded frame region which stores the independent frames and dependent frames which are decoded depending on other frames,

wherein said regions are integrated to form the image data.

31. A coded image data structure according to Claim 30, wherein said coded frame region includes coded data of a difference between a key frame serving as the independent frame and a virtual key frame serving as the dependent frame.

Fig.1a  Fig.1b

Fig.1c  Fig.1d

Fig.1e  Fig.1f

Fig.1g  Fig.1h

Fig.1i  Fig.1j

Fig.2R

Fig.2A

Fig.2E

Fig.2B

Fig.2D

Fig.2C

Fig. 3

## X Graph

Fig.4

Fig.5a

Fig.5b

Fig. 6

Fig. 7

START S10

m←n  S100

DETECT
CRITICAL POINT  S101

GENERATE M-1
LEVEL IMAGE  S102

m←m-1  S103

S104
m<0?
N
Y

END S10

Fig. 8

Fig. 9

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

Fig.11

START S2

$\eta \leftarrow 0$
$m \leftarrow 0$ — S20

COMPUTE
$f^{(m,s)} (\eta = i\Delta\eta)$
AT M LEVEL — S21

$m \leftarrow m+1$ — S22

$m > n?$ — S23
N / Y

$\eta \leftarrow \eta + \Delta\eta$
$m \leftarrow 0$ — S24

$\eta > \eta_{max}?$ — S25
N / Y

DETERMINE
$\eta_{opt}$ AND $f^{(n)}$ — S26

END S2

Fig.12

p(0, s)          q(0, s)

## Fig.13

A    B         A'    B'

a'        b'

x

C    D    p(1, s)     C'    D'    q(1, s)

c    d                 c'        d'

## Fig.14

START S21

$$s \leftarrow 0$$
$$\lambda \leftarrow 0$$

S210

S211

COMPUTE
$f^{(m,s)}$ ($\lambda = i\Delta\lambda$)

S212

$$\lambda \leftarrow \lambda + \Delta\lambda$$

S213

N ← $\lambda > \lambda_{max}$?

Y

S214

DETERMINE
$\lambda_{opt}$ AND $f^{(m,s)}$

S215

$$\lambda \leftarrow 0$$
$$s \leftarrow s+1$$

S16

N ← s > 4?

Y

END S21

Fig.15

Fig.16

Fig.17

Fig.18

IMAGE DATA

IMAGE DATA CODING APPARATUS ⌐10

IMAGE DATA INPUT UNIT ⌐12

FRAME SEPARATING UNIT ⌐14

KEY FRAME DETECTING UNIT ⌐16

INTERMEDIATE FRAME GENERATING UNIT

MATCHING COMPUTATION UNIT ⌐20

FRAME INTERPOLATING UNIT ⌐22

18

34

36

38

KEY FRAME COMPRESSING UNIT ⌐30

INTERMEDIATE FRAME CODING UNIT ⌐24

COMPARATOR ⌐26

DIFFERENCE CODING UNIT ⌐28

40

42

CODED DATA GENERATING UNIT ⌐32

NETWORK, STORAGE

Fig.19

START

| INPUT IMAGE DATA | S1010 |

| SEPARATE FRAMES | S1012 |

| COMPUTE MATCHING OF KEY FRAMES | S1014 |

| GENERATE A VIRTUAL INTERMEDIATE FRAME | S1016 |

| CODE AN ACTUAL INTERMEDIATE FRAME | S1018 |

| GENERATE CODED IMAGE DATA | S1020 |

END

Fig.20

302      304      306      308

| IMAGE INDEX | REFERENCE DATA | KEY FRAME DATA KF0, 10, 20, . . . | CODED INTERMEDIATE FRAME CDI1−9, 11−19, .. |
|---|---|---|---|

300

# Fig.21

CODED IMAGE DATA

*100*

IMAGE DATA DECODING APPARATUS

*102*

CODED IMAGE DATA
INPUT UNIT

*104*

CODED FRAME
SEPARATION UNIT

*112*

*42*  *106*

KEY FRAME
DECODING UNIT

*114*

DIFFERENCE
DECODING UNIT

*116*  *38*

INTERMEDIATE FRAME
GENERATING UNIT

MATCHING
COMPUTATION UNIT  *20*

FRAME INTER
-POLATING UNIT  *22*

*18*

*108*

*34*

*36*

*110*

DECODED DATA
GENERATING UNIT

IMAGE DATA

Fig.22

**Fig.23**

Fig.24

IMAGE DATA

~10

IMAGE DATA CODING APPARATUS

| IMAGE DATA INPUT UNIT | ~12 |

FRAME SEPARATING UNIT ~14

| KEY FRAME DETECTING UNIT | ~16 |

38

FRAME GENERATING UNIT

| MATCHING COMPUTATION UNIT | ~20 |

| FRAME INTER -POLATING UNIT | ~22 |

430

INDEPENDENT KEY FRAME COMPRESSING UNIT

418 434 436

424

FRAME CODING UNIT

| COMPARATOR | ~26 |

| DIFFERENCE CODING UNIT | ~28 |

42

40 32

CODED DATA GENERATING UNIT

NETWORK, STORAGE

Fig.25

Fig.26

START

INPUT IMAGE DATA — S1010

SEPARATE FRAMES — S1012

COMPUTE MATCHING OF KEY FRAMES — S1014

GENERATE VIRTUAL FRAMES — S2016

CODE ACTUAL FRAMES — S2018

GENERATE CODED IMAGE DATA — S1020

END

Fig.27

302  304  326  328

| IMAGE INDEX | REFERENCE DATA | INDEPENDENT KEY FRAME DATA KF0,10,20.... | CODED FRAME CDI 1-9,11-19.... |

300

Fig.28

CODED IMAGE DATA

100

IMAGE DATA DECODING APPARATUS

CODED IMAGE DATA INPUT UNIT — 102

CODED FRAME SEPARATION UNIT — 104

112

42

INDEPENDENT KEY FRAME DECODING UNIT — 506

114

DIFFERENCE DECODING UNIT

FRAME GENERATING UNIT

MATCHING COMPUTATION UNIT — 20

FRAME INTERPOLATING UNIT — 22

116

538

518

108

534

540

110

DECODED DATA GENERATING UNIT

IMAGE DATA

Fig.29

START

INPUT CODED IMAGE DATA — S1050

SEPARATE DATA — S1052

DECODE INDEPENDENT KEY FRAMES — S2054

COMPUTE MATCHING OF INDEPENDENT KEY FRAMES — S2056

GENERATE A VIRTUAL KEY FRAME — S2058

GENERATE AN ACTUAL KEY FRAME — S2060

GENERATE A VIRTUAL INTERMEDIATE FRAME — S2062

GENERATE AN ACTUAL INTERMEDIATE FRAME — S2064

GENERATE DECODED IMAGE DATA — S1066

END

**Fig.30**